(19) Europäisches Patentamt / European Patent Office / Office européen des brevets

(11) **EP 4 711 399 A1**

(12) **EUROPEAN PATENT APPLICATION**
published in accordance with Art. 153(4) EPC

(43) Date of publication:
**18.03.2026 Bulletin 2026/12**

(21) Application number: 25812613.5

(22) Date of filing: **09.07.2025**

(51) International Patent Classification (IPC):
**C08G 65/12** (2006.01)   **C08G 65/336** (2006.01)
**C08G 18/48** (2006.01)   **C08G 65/32** (2006.01)

(52) Cooperative Patent Classification (CPC):
**C08G 65/12; C08G 65/336;** C08G 18/48;
C08G 65/32

(86) International application number:
**PCT/JP2025/024634**

(87) International publication number:
**WO 2026/014467 (15.01.2026 Gazette 2026/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 12.07.2024 JP 2024112611
12.07.2024 JP 2024112619
12.07.2024 JP 2024112644
12.07.2024 JP 2024112667

(71) Applicant: **AGC INC.**
**Chiyoda-ku,**
**Tokyo 1008405 (JP)**

(72) Inventors:
• **TAKEDA, Hajime**
  **Tokyo 100-8405 (JP)**
• **ARAI, Takeaki**
  **Tokyo 100-8405 (JP)**
• **KOGUCHI, Ryohei**
  **Tokyo 100-8405 (JP)**

(74) Representative: **Müller-Boré & Partner**
**Patentanwälte PartG mbB**
**Friedenheimer Brücke 21**
**80639 München (DE)**

(54) **METHOD FOR PRODUCING POLYETHER COMPOUND, METHOD FOR PRODUCING POLYETHER COMPOUND HAVING REACTIVE SILICON GROUP, METHOD FOR PRODUCING POLYETHER COMPOUND HAVING URETHANE BOND, AND METHOD FOR PRODUCING POLYETHER COMPOUND HAVING POLYMERIZABLE UNSATURATED GROUP**

(57) A method of producing a polyether compound containing a hydroxyl group according to the present invention includes polymerizing an AO in an AO-containing raw material with an initiator containing a hydroxyl group in a presence of a composite metal cyanide complex catalyst, in which a total content of an aldehyde which is measured by a titration method for the AO-containing raw material is less than 15 ppm with respect to a total mass of the AO-containing raw material, a method of producing a polyether compound containing a reactive silicon group further includes converting a hydroxyl group of a polyether compound into a group containing a reactive silicon group, a method of producing a polyether compound having a urethane bond further includes reacting a polyether compound containing a hydroxyl group with a polyisocyanate, and a method of producing a polyether compound containing a polymerizable unsaturated group further includes converting a hydroxyl group of a polyether compound into a group containing a polymerizable unsaturated group.

EP 4 711 399 A1

**Description**

TECHNICAL FIELD

The present invention relates to a method of producing a polyether compound, a method of producing a polyether compound containing a reactive silicon group, a method of producing a polyether compound having a urethane bond, and a method of producing a polyether compound containing a polymerizable unsaturated group.

BACKGROUND ART

A polyether compound is used as a raw material for an adhesive, a coating material, a sealant, and the like. The polyether compound is produced by polymerizing an alkylene oxide with an initiator having active hydrogen. As a polymerization catalyst for obtaining a polyether compound having a small molecular weight distribution, a composite metal cyanide complex catalyst is known.

Patent Document 1 discloses a method of producing hydrolyzable silyl group-containing polyoxyalkylene, including a step of performing ring-opening polymerization on a monoepoxide having a moisture content of 5 ppm or greater and less than 50 ppm to obtain hydroxyl group-containing polyoxyalkylene and a step of introducing a hydrolyzable silyl group into the hydroxyl group-containing polyoxyalkylene. Patent Document 1 discloses that the hydrolyzable silyl group-containing polyoxyalkylene to be obtained can exhibit a high modulus after curing by using a monoepoxide having a low moisture content.

It is known that the polyether compound containing a reactive silicon group has a property of being crosslinked by the formation of a siloxane bond accompanied by a hydrolysis reaction or the like of the reactive silicon group due to moisture or the like even at room temperature, and obtaining a rubber-like cured substance. Therefore, the polyether compound containing a reactive silicon group has already been industrially produced and is widely used for applications such as a sealing material or an adhesive.

The polyether compound containing a reactive silicon group is produced using a polyether compound containing a hydroxyl group as a raw material. The polyether compound containing a hydroxyl group is produced by polymerizing an alkylene oxide with an initiator having active hydrogen. As a polymerization catalyst for obtaining a polyether compound having a narrow molecular weight distribution, a composite metal cyanide complex catalyst is known.

A polyether compound having a urethane bond, such as a urethane prepolymer, is used as a raw material for an adhesive, a coating material, a sealant, a coating, and the like. The polyether compound having a urethane bond is produced using a polyether compound containing a hydroxyl group as a raw material. The polyether compound containing a hydroxyl group is produced by polymerizing an alkylene oxide with an initiator having active hydrogen. As a polymerization catalyst for obtaining a polyether compound having a small molecular weight distribution, a composite metal cyanide complex catalyst is known.

Patent Document 2 discloses a urethane prepolymer composition (G) containing a urethane prepolymer (E) having a hydroxyl group terminal and a polyalkylene oxide (B). In addition, Patent Document 2 discloses that the urethane prepolymer (E) is a reactant of a polyol and a polyisocyanate (C), and contains at least one urethane group and at least one hydroxyl group in one molecule. Further, Patent Document 2 also discloses that the polyol can be produced by a composite metal cyanide complex catalyst.

A polyether compound containing a polymerizable unsaturated group is used as a raw material for a pressure sensitive adhesive or the like in the fields of optical component materials, liquid crystal panels, and the like (for example, Patent Document 3). The polyether compound containing a polymerizable unsaturated group is produced using a polyether compound containing a hydroxyl group as a raw material. The polyether compound containing a hydroxyl group is produced by polymerizing an alkylene oxide with an initiator having active hydrogen. As a polymerization catalyst for obtaining a polyether compound having a narrow molecular weight distribution, a composite metal cyanide complex catalyst is known.

Citation List

Patent Documents

Patent Document 1: PCT International Publication No. WO2023/095636
Patent Document 2: Japanese Unexamined Patent Application, First Publication No. 2023-155601
Patent Document 3: Japanese Unexamined Patent Application, First Publication No. 2012-126839

## SUMMARY OF INVENTION

Technical Problem

However, according to the examination conducted by the present inventors, in a case where a composite metal cyanide complex catalyst is used, the unsaturation degree of the polyether compound to be obtained is increased in some cases.

Patent Document 1 does not describe impurities other than water as the impurities of the monoepoxide.

An object of the present invention is to provide a production method of obtaining a polyether compound having a low unsaturation degree.

In addition, according to the examination conducted by the present inventors, a polyether compound containing a reactive silicon group, which is obtained by a method of the related art, has insufficient hardness of a cured substance in some cases.

Another object of the present invention is to provide a production method of obtaining a polyether compound containing a reactive silicon group, in which a cured substance has excellent strength.

In a case where a polyether compound having a urethane bond is used for the above-described applications such as an adhesive and a sealant, the polyether compound is required to have curing properties. However, the curing properties of the polyether compound having a urethane bond, which is produced by the production method described in Patent Document 2, are not sufficient.

Still another object of the present invention is to provide a production method of obtaining a polyether compound having a urethane bond, which has excellent curing properties.

In addition, according to the examination conducted by the present inventors, even a polyether compound containing a polymerizable unsaturated group, which is obtained by a method of the related art, has insufficient hardness of a cured substance in some cases.

Still another object of the present invention is to provide a production method of obtaining a polyether compound containing a polymerizable unsaturated group, in which a cured substance has excellent hardness.

Solution to Problem

Suitable embodiments of the present invention provide the following means.

[1] A method of producing a polyether compound containing a hydroxyl group, the method including: bringing an initiator containing a hydroxyl group into contact with an alkylene oxide-containing raw material in a presence of a composite metal cyanide complex catalyst and polymerizing an alkylene oxide in the alkylene oxide-containing raw material with the initiator, in which a total content of an aldehyde which is measured by a titration method for the alkylene oxide-containing raw material is less than 15 ppm with respect to a total mass of the alkylene oxide-containing raw material.

[2] The production method according to [1], in which a content of acetaldehyde in the alkylene oxide-containing raw material is less than 10 ppm with respect to the total mass of the alkylene oxide-containing raw material.

[3] The production method according to [1] or [2], in which the alkylene oxide-containing raw material contains an alkylene oxide having 3 or more carbon atoms.

[4] The production method according to any one of [1] to [3], in which the number of hydroxyl groups in the initiator is 1 to 10.

[5] The production method according to any one of [1] to [4], in which a molecular weight of the polyether compound containing the hydroxyl group in terms of hydroxyl value is 1,000 to 100,000.

[6] The production method according to any one of [1] to [5], in which a slurry catalyst in which particles of the composite metal cyanide complex catalyst are dispersed in a dispersion medium is used.

Suitable embodiments of the present invention also provide the following means.

[1A] A method of producing a polyether compound containing a reactive silicon group, the method including: bringing an initiator containing a hydroxyl group into contact with an alkylene oxide-containing raw material in a presence of a composite metal cyanide complex catalyst, polymerizing an alkylene oxide in the alkylene oxide-containing raw material with the initiator, and converting a hydroxyl group of the obtained polyether compound containing the hydroxyl group into a group containing a reactive silicon group represented by Formula 1, in which a total content of an aldehyde which is measured by a titration method for the alkylene oxide-containing raw material is less than 15 ppm with respect to a total mass of the alkylene oxide-containing raw material.

EP 4 711 399 A1

$$-SiR_aX_{3-a} \qquad \text{Formula 1}$$

in Formula 1, R represents a monovalent organic group having 1 to 20 carbon atoms, which is an organic group other than a hydrolyzable group, X represents a hydroxyl group, a halogen atom, or a hydrolyzable group, a represents an integer of 0 to 2, and R's may be the same as or different from each other in a case where a represents 2, and X's may be the same as or different from each other in a case where a represents 0 or 1.

[2A] The production method according to [1A], in which a content of acetaldehyde in the alkylene oxide-containing raw material is less than 10 ppm with respect to the total mass of the alkylene oxide-containing raw material.

Suitable embodiments of the present invention also provide the following means.

[1B] A method of producing a polyether compound having a urethane bond, the method including: bringing an initiator containing a hydroxyl group into contact with an alkylene oxide-containing raw material in a presence of a composite metal cyanide complex catalyst, polymerizing an alkylene oxide in the alkylene oxide-containing raw material with the initiator, and reacting the obtained polyether compound containing a hydroxyl group with a polyisocyanate, in which a total content of an aldehyde which is measured by a titration method for the alkylene oxide-containing raw material is less than 15 ppm with respect to a total mass of the alkylene oxide-containing raw material.

[2B] The production method according to [1B], in which a content of acetaldehyde in the alkylene oxide-containing raw material is less than 10 ppm with respect to the total mass of the alkylene oxide-containing raw material.

Suitable embodiments of the present invention also provide the following means.

[1C] A method of producing a polyether compound containing a polymerizable unsaturated group, the method including: bringing an initiator containing a hydroxyl group into contact with an alkylene oxide-containing raw material in a presence of a composite metal cyanide complex catalyst, polymerizing an alkylene oxide in the alkylene oxide-containing raw material with the initiator, and converting a hydroxyl group of the obtained polyether compound containing the hydroxyl group into a group containing a polymerizable unsaturated group, in which a total content of an aldehyde which is measured by a titration method for the alkylene oxide-containing raw material is less than 15 ppm with respect to a total mass of the alkylene oxide-containing raw material.

[2C] The production method according to [1C], in which a content of acetaldehyde in the alkylene oxide-containing raw material is less than 10 ppm with respect to the total mass of the alkylene oxide-containing raw material.

Advantageous Effects of Invention

According to the present invention, it is possible to provide a production method of obtaining a polyether compound having a low unsaturation degree.

According to the present invention, it is also possible to provide a production method of obtaining a polyether compound containing a reactive silicon group, in which a cured substance has excellent strength.

According to the present invention, it is also possible to provide a production method of obtaining a polyether compound having a urethane bond, which has excellent curing properties.

According to the present invention, it is also possible to provide a production method of obtaining a polyether compound containing a polymerizable unsaturated group, in which a cured substance has excellent strength.

DESCRIPTION OF EMBODIMENTS

The meanings and definitions of terms in the present specification are as follows.

A numerical range represented by "to" means a numerical range in which numerical values before and after "to" are the lower limit and the upper limit. Lower limits and upper limits of different numerical ranges disclosed in the present specification can be arbitrarily combined to generate new numerical ranges.

"Polyether compound" is a polyether compound containing a hydroxyl group. "Polyether compound" does not contain a reactive silicon group, a urethane bond, a polymerizable unsaturated group, and an isocyanate group.

"Polyether compound containing a reactive silicon group" contains a reactive silicon group. "Polyether compound containing a reactive silicon group" may contain any one or more of a hydroxyl group, a urethane bond, a polymerizable unsaturated group, and an isocyanate group.

"Polyether compound having a urethane bond" has a urethane bond. "Polyether compound having a urethane bond" may contain a hydroxyl group and an isocyanate group. "Polyether compound having a urethane bond" does not contain a reactive silicon group and a polymerizable unsaturated group. "Polyether compound having a urethane bond" will also be referred to as "prepolymer" hereinafter.

4

"Polyether compound containing a polymerizable unsaturated group" contains a polymerizable unsaturated group. "Polyether compound containing a polymerizable unsaturated group" may contain any one or more of a hydroxyl group, a urethane bond, and an isocyanate group. "Polyether compound containing a polymerizable unsaturated group" does not contain a reactive silicon group.

Hereinafter, "polyether compound", "polyether compound containing a reactive silicon group", "polyether compound having a urethane bond", and "polyether compound containing a polymerizable unsaturated group" are also collectively referred to as "polyether compound and the like".

The term "unit" constituting the polyether compound or the like denotes an atomic group directly formed by polymerization of a monomer.

The term "main chain" denotes a polymer chain formed by polymerization of two or more monomers. The term "main chain" in the polyether compound, the polyether compound containing a reactive silicon group, and the polyether compound containing a polymerizable unsaturated group described below denotes a portion (polyoxyalkylene chain) including a residue obtained by removing active hydrogen from an initiator and a repeating unit based on an alkylene oxide.

The polyether compound, the polyether compound containing a reactive silicon group, and the polyether compound containing a polymerizable unsaturated group are polymers formed of a main chain and a terminal group.

The term "terminal group" of the polyether compound, the polyether compound containing a reactive silicon group, and the polyether compound containing a polymerizable unsaturated group denotes an atomic group having an oxygen atom closest to a molecular terminal among the oxygen atoms in the polyoxyalkylene chain. Here, in a case where the atomic group includes a residue of an initiator, the atomic group is not regarded as a terminal group but regarded as a part of the main chain. The expression "number of terminal groups" in the polyether compound, the polyether compound containing a reactive silicon group, and the polyether compound containing a polymerizable unsaturated group is the same as the number of active hydrogens of the initiator described below.

"Active hydrogen-containing group" is at least one group selected from the group consisting of a hydroxyl group bonded to a carbon atom, a carboxy group, an amino group, a monovalent functional group obtained by removing one hydrogen atom from a primary amine, a hydrazide group, and a sulfanyl group.

"Active hydrogen" is a hydrogen atom based on an active hydrogen-containing group and a hydrogen atom based on a hydroxyl group of water.

The term "silylation ratio" in the polyether compound containing a reactive silicon group is a ratio of the number of reactive silicon groups to the total number of the reactive silicon groups, the hydroxyl groups, the unsaturated groups, and the isocyanate groups in the terminal group of the polyether compound containing a reactive silicon group. Specifically, the silylation ratio is calculated by the following equation.

Silylation ratio (%) = 100 $\times$ number of reactive silicon groups/[number of reactive silicon groups + number of hydroxyl groups + number of isocyanate groups + (number of carbon-carbon double bonds) + (number of carbon-carbon triple bonds) $\times$ 2]

The value of the silylation ratio can be measured by NMR analysis. The value of the silylation ratio may be the ratio (% by mole) of the number of silyl groups of the added silylating agent to the number of terminal groups in a case where a reactive silicon group is introduced into the terminal group of the polyether compound by the silylating agent. Here, in this case, a diisocyanate compound is used as the polyisocyanate compound in the method (c1) described below.

The term "silylating agent" denotes a compound containing a functional group which reacts with an active hydrogen-containing group, an unsaturated group, or an isocyanate group, and a reactive silicon group.

The content of the isocyanate group with respect to the total mass of the prepolymer described below is a value measured in conformity with JIS K 7301: 1995.

The number average molecular weight (Mn) and the weight-average molecular weight (Mw) in the present specification are molecular weights in terms of polystyrene, which are measured by using gel permeation chromatography (GPC) with tetrahydrofuran as an eluent and creating a calibration curve using a polystyrene polymer having a known molecular weight. The molecular weight distribution (Mw/Mn) is a ratio of Mw to Mn.

The term "hydroxyl value" of the polyether compound is a value measured in conformity with the method B (phthalation method) described in JIS K 1557-1: 2007.

The molecular weight in terms of hydroxyl value is a value calculated by 56, 100/hydroxyl value of polyether compound $\times$ number of hydroxyl groups of polyether compound (number of active hydrogens in the initiator). In a case of containing two or more kinds of polyether compounds having different numbers of hydroxyl groups, the number of hydroxyl groups of the polyether compound is the average number of hydroxyl groups.

The unsaturation degree of the polyether compound is measured in conformity with JIS K 1557-3: 2007.

The viscosity of the polyether compound is measured using an E-type viscometer.

The total content of aldehyde in the alkylene oxide-containing raw material is the total amount of a compound containing a formyl group, and is measured by a titration method. The details are as described in the examples.

The content of an alkylene oxide and the content of acetaldehyde in the alkylene oxide-containing raw material are measured by gas chromatography. The details are as described in the examples.

Unless otherwise specified, "ppm" is in terms of mass.

[Method of producing polyether compound]

A method of producing a polyether compound according to the present embodiment includes bringing an initiator having active hydrogen into contact with an alkylene oxide-containing raw material in the presence of a composite metal cyanide complex catalyst, and polymerizing an alkylene oxide in the alkylene oxide-containing raw material with the initiator.

(Alkylene oxide-containing raw material)

The alkylene oxide-containing raw material contains an alkylene oxide (hereinafter, also referred to as "AO"). AO is selected according to the constitutional unit of the polyoxyalkylene chain of the polyether compound to be produced.

Examples of AO include ethylene oxide (hereinafter, also referred to as "EO"), propylene oxide (hereinafter, also referred to as "PO"), 1,2-butylene oxide, and 2,3-butylene oxide.

From the viewpoint of the reactivity, AO having 3 or more carbon atoms is preferable as AO. AO having 3 to 5 carbon atoms is preferable, and PO is more preferable as AO having 3 or more carbon atoms.

The AO-containing raw material may have one or two or more kinds of AOs.

The AO-containing raw material can contain components other than AO (hereinafter, also referred to as "impurities") in addition to AO.

The crude product obtained by the synthesis reaction of AO contains impurities. The crude product is usually subjected to a purification treatment, but some of the impurities remain even after the purification treatment. In addition, even for the same products, the content of impurities may vary depending on the lot.

The impurities vary depending on the synthesis method for AO, and examples thereof include water, an aldehyde, an acid, methanol, methyl formate, and chlorine. Examples of the aldehyde include formaldehyde, acetaldehyde, and propionaldehyde.

The AO-containing raw material may contain one or two or more kinds of impurities.

The content of AO (the purity of AO) in the AO-containing raw material is preferably 97% by mass or greater, more preferably 98% by mass or greater, and still more preferably 99% by mass or greater with respect to the total mass of the AO-containing raw material.

The total content of AO and the impurities does not exceed 100% by mass with respect to the total mass of the AO-containing raw material.

The total content of the aldehyde in the AO-containing raw material is less than 15 ppm, preferably less than 14 ppm, and more preferably less than 13 ppm with respect to the total mass of the AO-containing raw material. In a case where the content of the aldehyde is less than or equal to the above-described upper limits, the unsaturation degree of the polyether compound can be reduced.

The total content of aldehyde in the AO-containing raw material is preferably 0 ppm or greater and more preferably 0.5 ppm or greater with respect to the total mass of the AO-containing raw material. In a case where the total content of aldehyde is greater than or equal to the above-described lower limits, the performance of the polyether compound to be obtained is more excellent.

The above-described upper limits and lower limits can be appropriately combined.

The content of acetaldehyde in the AO-containing raw material is preferably less than 10 ppm, more preferably less than 9.5 ppm, still more preferably less than 9 ppm, and particularly preferably less than the detection limit with respect to the total mass of the AO-containing raw material. The detection limit of acetaldehyde is usually 0.1 ppm. In a case where the content of the acetaldehyde is less than or equal to the above-described upper limits, the unsaturation degree of the polyether compound can be reduced.

As the AO-containing raw material, a commercially available AO-containing raw material in which the content of impurities is in a desired range may be selected from among commercially available AO-containing raw materials and used, or an AO-containing raw material produced by a known production method may be used.

For example, a target AO-containing raw material may be obtained by synthesizing AO using a known method and adjusting the content of impurities of a crude product containing the obtained AO. A target AO-containing raw material may be obtained by adjusting the content of impurities in a commercially available AO-containing raw material.

Examples of a method of adjusting the content of impurities include a method of reducing the content of impurities by a purification treatment and a method of adding impurities. Examples of the purification treatment include washing with water and drying.

The kind and the content of impurities in the crude product or the AO-containing raw material can be adjusted depending on the conditions of the synthesis method and the purification treatment of AO.

(Initiator)

The number of active hydrogens of the initiator is preferably 1 or more, more preferably 1 to 10, still more preferably 1 to 8, and particularly preferably 1 to 6. It is preferable that the number of active hydrogens of the initiator is selected according to the number of hydroxyl groups per molecule of the polyether compound to be obtained. The number of active hydrogens of the initiator is the same as the number of terminal groups of the polyether compound.

The initiator may be used alone or in combination of two or more kinds thereof.

It is preferable that the initiator contains a hydroxyl group as an active hydrogen-containing group.

As the initiator containing one hydroxyl group, a monohydric alcohol containing a linear or branched hydrocarbon group is preferable. Specific examples thereof include methyl alcohol, ethyl alcohol, 1-propyl alcohol, 2-propyl alcohol, n-butyl alcohol, isobutyl alcohol, 2-butyl alcohol, tert-butyl alcohol, 2-ethylhexanol, decyl alcohol, lauryl alcohol, tridecanol, cetyl alcohol, stearyl alcohol, and oleyl alcohol.

Examples of the initiator containing two hydroxyl groups include ethylene glycol, diethylene glycol, propylene glycol, dipropylene glycol, triethylene glycol, tripropylene glycol, neopentyl glycol, 1,4-butanediol, and 1,6-hexanediol.

Examples of the initiator containing two hydroxyl groups include water.

Examples of the initiator containing three hydroxyl groups include glycerin, trimethylolpropane, and trimethylolethane.

Examples of the initiator containing 4 or more hydroxyl groups include pentaerythritol, diglycerin, meso-erythritol, methylglucoside, sucrose, glucose, sorbitol, dipentaerythritol, trehalose, and diglycerin.

In addition, a low-molecular-weight polymer obtained by polymerizing an alkylene oxide with these initiators in the presence of an alkali metal hydroxide may be used as the initiator.

The hydroxyl value of the initiator is, for example, preferably 3 to 842 mgKOH/g and more preferably 7 to 561 mgKOH/g.

(Composite metal cyanide complex catalyst)

The composite metal cyanide complex catalyst (hereinafter, also referred to as "DMC catalyst") functions as a polymerization catalyst for an alkylene oxide. The DMC catalyst is a crystalline solid, and contains a reactant of a metal halide salt and a transition metal cyanide compound, an organic ligand, and crystal water (coordinated water or the like) encompassed in the crystal. In addition, the DMC catalyst can contain a trace amount of impurities in metal salts, metal compounds, and the like, which are unavoidable in production, and moisture other than crystal water.

As the metal halide salt, the transition metal cyanide compound, and the organic ligand, those known in the production of the DMC catalyst can be used.

The DMC catalyst is considered to be represented by Formula 2.

$$M^1{}_a[M^2(CN)_b]_c \cdot d(M^1{}_c X_f) \cdot g(\text{Ligand}) \cdot h(H_2O) \qquad \text{Formula 2}$$

In Formula 2, $M^1{}_c X_f$ represents a metal halide salt, $M^1$ represents a metal atom serving as a cation, X represents a halogen atom serving as a counter anion, $M^2$ represents a metal atom serving as an active site, which is a transition metal contained in a transition metal cyanide compound, and Ligand represents an organic ligand. a, b, c, d, e, f, g, and h represent an integer, and a, b, c, e, and f represent the number that is electrically neutral.

Examples of $M^1$ include Zn(II), Fe(II), Fe(III), Co(II), Ni(II), Al(III), Sr(II), Mn(II), Cr(III), Cu(II), Sn(II), Pb(II), Mo(IV), Mo(VI), W(IV), and W(VI).

Examples of $M^2$ include Co(III), Fe(II), Fe(III), Co(II), Co(III), Cr(II), Cr(III), Mn(II), Mn(III), V(IV), and V(V).

Examples of X include Cl, Br, and I.

It is preferable that the metal halide salt represented by $M^1{}_c X_f$ includes one or more selected from zinc fluoride, zinc chloride, zinc bromide, zinc iodide, zinc sulfate, zinc nitrate, and zinc acetate. It is more preferable that the metal halide salt includes one or more selected from zinc chloride and zinc bromide from the viewpoint of the interatomic distance between $M^2$ and X described below.

Examples of the ligand (organic ligand) include alcohol, ether, ester, aldehyde, ketone, amide, nitrile, sulfide, ethylene glycol dimethyl ether, diethylene glycol dimethyl ether, and polyoxyalkylene poly (or mono)ol. The organic ligand may be one kind or two or more kinds. Examples of the alcohol include tert-butyl alcohol, n-butyl alcohol, sec-butyl alcohol, iso-butyl alcohol, tert-pentyl alcohol, iso-pentyl alcohol, and ethylene glycol mono-tert-butyl ether. Examples of the polyoxyalkylene poly(or mono)ol include polypropylene diol. As the organic ligand, tert-butyl alcohol is preferable.

Preferred examples of the DMC catalyst include zinc hexacyanocobaltate ($Zn_3[Co(CN)_6]_2$) containing an organic

ligand (Ligand), water, and zinc chloride or zinc bromide. The chemical formula thereof is considered to be $Zn_3[Co(CN)_6]_2 \cdot d(ZnCl_2) \cdot g(Ligand) \cdot h(H_2O)$ or $Zn_3[Co(CN)_6]_2 \cdot d(ZnBr_2) \cdot g(Ligand) \cdot h(H_2O)$.

As the DMC catalyst, a zinc hexacyanocobaltate ($Zn_3[Co(CN)_6]_2$) complex having a ligand of tert-butyl alcohol is preferable. Water and zinc chloride may be coordinated to the complex.

The DMC catalyst may be used, for example, for producing a polyether compound in a solid state or for producing a polyether compound in a state of a slurry (hereinafter, also referred to as "slurry catalyst") in which particles of the DMC catalyst are dispersed in a dispersion medium.

The slurry catalyst includes a DMC catalyst and a dispersion medium.

The slurry catalyst is preferably a slurry that contains a DMC catalyst and a dispersion medium, and that may further contain impurities unavoidable in production and moisture.

As the dispersion medium of the slurry catalyst, a known organic solvent in the slurry catalyst can be used. For example, a non-volatile hydroxy compound described in Japanese Patent No. 3194255 can be used. The hydroxy compound is a hydroxyl group-containing compound having 1 to 8 hydroxyl groups and a molecular weight of 100 to 8,000, and is preferably a compound containing an alcoholic hydroxyl group, such as a polyether compound.

As the dispersion medium of the slurry catalyst, a second polyether compound is preferable from the viewpoint that the compound does not become an impurity for the product (polyether compound) obtained by polymerization of an alkylene oxide. That is, it is preferable that the dispersion medium of the slurry catalyst includes the second polyether compound.

The Mn of the second polyether compound used as the dispersion medium is preferably 100 to 8,000 and more preferably 600 to 3,000. In a case where the Mn is greater than or equal to the above-described lower limits, the compound does not become a catalyst poison, and in a case where the Mn is less than or equal to the above-described upper limits, the handleability of the slurry catalyst is excellent.

An initiator in a case of polymerizing an alkylene oxide may be used as a part of the dispersion medium.

It is preferable that the dispersion medium of the slurry catalyst does not substantially contain water. Specifically, the moisture content of the dispersion medium is preferably 500 ppm or less and more preferably 200 ppm or less, and may be an amount that cannot be detected.

The moisture content of the dispersion medium is a content of water to be measured by a Karl Fischer measuring method.

The content of the DMC catalyst is, for example, preferably 0.001% to 60% by mass, more preferably 0.003% to 50% by mass, and still more preferably 0.006% to 30% by mass with respect to the total mass of the slurry catalyst.

In particular, in a case where the dispersion medium is the second polyether compound, the content of the DMC catalyst is preferably 1% to 60% by mass, more preferably 3% to 40% by mass, and still more preferably 5% to 30% by mass with respect to the total mass of the slurry catalyst.

In particular, in a case where the dispersion medium contains an initiator, the content of the DMC catalyst is preferably 0.003% to 0.020% by mass, more preferably 0.004% to 0.015% by mass, and still more preferably 0.006% to 0.010% by mass with respect to the total mass of the slurry catalyst.

The DMC catalyst can be produced by a known method.

For example, the DMC catalyst is synthesized by reacting a metal halide salt with a transition metal cyanide compound to obtain a reaction product and coordinating an organic ligand to the reaction product. After the DMC catalyst is synthesized, the moisture content of the DMC catalyst may be adjusted.

A mixed solution containing the DMC catalyst and water is obtained by reacting a metal halide salt with a transition metal cyanide compound in the presence of water to obtain a reaction product, and coordinating an organic ligand to the reaction product in the presence of water. The DMC catalyst may be obtained by removing Impurities and water from the obtained mixed solution and reducing the moisture content of the obtained solid to a predetermined range.

Examples of a preferable aspect of the method of producing the DMC catalyst include the following method.

First, an aqueous solution of a metal halide salt reacts with an aqueous solution of a transition metal cyanide compound to produce a reaction product. An aqueous solution of an organic ligand is added thereto and stirred to coordinate the organic ligand, thereby obtaining a mixed solution containing the DMC catalyst and water. The obtained mixed solution is subjected to solid-liquid separation to obtain a solid. The obtained solid is washed with an aqueous solution containing an organic ligand, and the solid-liquid separation operation is performed once or more and preferably twice or more. In addition, the obtained solid may be dried such that the moisture content is in the above-described specific range, and may be pulverized as necessary.

The concentration of the metal halide salt in the aqueous solution of the metal halide salt is preferably 10% by mass or greater, more preferably 30% by mass or greater, and still more preferably 50% by mass or greater. In addition, the content thereof is preferably less than or equal to the saturation concentration.

The concentration of the transition metal cyanide compound in the aqueous solution of the transition metal cyanide compound is preferably 2% to 50% by mass, more preferably 2% to 20% by mass, and still more preferably 3% to 10% by mass.

The molar ratio of the metal contained in the metal halide salt to the transition metal contained in the transition metal cyanide compound is preferably 1.6 to 12 and more preferably 1.8 to 8.

The reaction temperature in the reaction between the aqueous solution of the metal halide salt and the aqueous solution of the transition metal cyanide compound is preferably 10°C to 65°C, more preferably 20°C to 60°C, and still more preferably 30°C to 55°C.

The concentration of the organic ligand in the aqueous solution of the organic ligand is preferably 10% to 90% by mass, more preferably 25% to 75% by mass, and still more preferably 35% to 65% by mass.

The temperature in a case of coordinating the organic ligand is preferably 10°C to 90°C, more preferably 20°C to 80°C, and still more preferably 30°C to 70°C.

After the organic ligand is coordinated, it is preferable to carry out solid-liquid separation. As a method for the solid-liquid separation, a method known in the related art, such as filtration or centrifugation, can be employed. The obtained solid includes a salt (alkali metal halide) generated by the reaction, in addition to the DMC catalyst. Therefore, it is preferable to remove the salt by washing the obtained solid. Specifically, an aqueous solution of an organic ligand is added to the obtained solid, and the solution is stirred and subjected to solid-liquid separation again. The washing time is preferably 10 to 90 minutes and more preferably 20 to 60 minutes. It is preferable that the solid is washed a plurality of times.

In a case of producing a slurry catalyst, a method of obtaining a mixed solution containing the DMC catalyst and water as described above, removing impurities and water from the obtained mixed solution, and adding a dispersion medium to prepare a slurry containing the DMC catalyst and the dispersion medium can be used. The washing may be carried out with an aqueous solution of the organic ligand before the addition of the dispersion medium.

(Polymerization of AO)

The initiator is brought into contact with the AO-containing raw material in the presence of the DMC catalyst to polymerize AO in the AO-containing raw material with the initiator (ring-opening addition polymerization).

In a case where the DMC catalyst is used as the polymerization catalyst for AO, the ratio Mw/Mn of the polyether compound is likely to decrease and the unsaturation degree of the polyether compound is likely to decrease, as compared with a case where a polymerization catalyst other than the DMC catalyst is used.

In a case where the polyoxyalkylene chain of the polyether compound is a random copolymer chain formed of a PO unit and an EO unit, a method of obtaining a polyether compound by bringing an initiator into contact with an AO-containing raw material containing PO and EO in the presence of a DMC catalyst is preferable. The same applies to a case of a combination of two or more kinds of AOs other than the combination of PO and EO.

In a case where the polyoxyalkylene chain of the polyether compound is a block copolymer chain having a block formed of a PO unit and a block formed of an EO unit, the polyether compound may be obtained by reacting an initiator with an AO-containing raw material containing PO in the presence of a DMC catalyst to obtain a precursor and reacting the precursor with an AO-containing raw material containing EO, or the polyether compound may be obtained by reacting an initiator with an AO-containing raw material containing EO in the presence of a DMC catalyst to obtain a precursor and reacting the precursor with an AO-containing raw material containing PO. The same applies to a case of a combination of two or more kinds of AOs other than the combination of PO and EO.

The amount of the DMC catalyst to be used is preferably 1 to 200 ppm, more preferably 5 to 60 ppm, and particularly preferably 10 to 50 ppm with respect to the total mass of the polyether compound to be finally obtained. In a case where the amount of the DMC catalyst to be used is greater than or equal to the above-described lower limits, the polymerization reaction is likely to proceed. In a case where the amount of the DMC catalyst to be used is less than or equal to the above-described upper limits, the amount of the DMC catalyst to be used is suppressed, which is economical.

The polymerization may be carried out continuously or batchwise, but it is preferable that the polymerization is carried out batchwise.

The polymerization temperature is preferably 30°C to 180°C, more preferably 70°C to 160°C, and still more preferably 90°C to 140°C.

The polymerization pressure is preferably 1.0 MPa or less, more preferably 0.8 MPa or less, and still more preferably 0.3 MPa or less.

It is preferable that the AO-containing raw material is supplied to the reactor at a rate at which the reaction temperature is maintained.

As the reaction atmosphere, an atmosphere where water is unlikely to be mixed is preferable, and an inert gas atmosphere such as nitrogen is more preferable.

The reaction solution after polymerization contains a polyether compound and a DMC catalyst. In addition, the reaction solution may contain a stabilizer, and contains a trace amount of impurities in some cases. Therefore, it is preferable that the reaction solution is purified by filtration.

[Polyether compound]

The main chain of the polyether compound is a polymer chain formed of an oxyalkylene chain having a residue obtained by removing active hydrogen from an initiator and a repeating unit based on one or more kinds of alkylene oxides (hereinafter, a repeating unit based on a monomer is simply referred to as "monomer unit", for example, a repeating unit based on AO is referred to as "AO unit"). In a case of a polymer chain having two or more kinds of AO units, the AO units may form a block polymer or a random polymer.

Examples of the oxyalkylene chain include a polymer chain having an EO unit, a polymer chain having a PO unit, a polymer chain having an EO unit and a PO unit, a polymer chain formed of an EO unit, a polymer chain formed of a PO unit, a polymer chain formed of a butylene oxide unit, a polymer chain formed of a tetramethylene oxide unit, a polymer chain formed of an EO unit and a PO unit, and a polymer chain formed of a PO unit and a butylene oxide unit. The oxyalkylene chain is preferably a polymer chain formed of an AO unit having 3 or more carbon atoms and particularly preferably a polymer chain formed of a PO unit.

The terminal group of the polyether compound is a hydroxyl group. The number of terminal groups of the polyether compound (that is, the number of hydroxyl groups) is the same as the number of active hydrogens of the initiator.

The Mn of the polyether compound is preferably 1,000 to 100,000, more preferably 1,500 to 80,000, and still more preferably 2,000 to 60,000. In a case where the Mn thereof is greater than or equal to the above-described lower limits, the flexibility is sufficiently imparted in a case where the polyether compound is used as an adhesive or a coating material, and satisfactory elongation properties are likely to be obtained. In a case where the Mn thereof is less than or equal to the above-described upper limits, the viscosity of the polyether compound can be suppressed to be low, and the handleability is improved.

The hydroxyl value of the polyether compound is preferably 0.5 to 350 mgKOH/g, more preferably 1 to 200 mgKOH/g, and still more preferably 5 to 100 mgKOH/g. In a case where the hydroxyl value is greater than or equal to the above-described lower limits, the curing properties are likely to be sufficiently obtained during resinification. In a case where the hydroxyl value is less than or equal to the above-described upper limits, the flexibility is sufficiently imparted to the resin, and satisfactory elongation properties are likely to be obtained.

The molecular weight of the polyether compound in terms of hydroxyl value is preferably 1,000 to 100,000, more preferably 1,500 to 80,000, and still more preferably 2,000 to 60,000. In a case where the molecular weight thereof in terms of hydroxyl value is greater than or equal to the above-described lower limits, the flexibility is sufficiently imparted in a case where the polyether compound is used as an adhesive or a coating material, and satisfactory elongation properties are likely to be obtained. In a case where the molecular weight thereof in terms of hydroxyl value is less than or equal to the above-described upper limits, the viscosity of the polyether compound can be suppressed to be low, and the handleability is improved.

The Mw of the polyether compound is preferably 1,200 to 120,000, more preferably 2,000 to 90,000, and still more preferably 3,000 to 70,000. In a case where the Mw thereof is greater than or equal to the above-described lower limits, the flexibility is sufficiently imparted in a case where the polyether compound is used as an adhesive or a coating material, and satisfactory elongation properties are likely to be obtained. In a case where the Mw thereof is less than or equal to the above-described upper limits, the viscosity of the polyether compound can be suppressed to be low, and thus the handleability is improved.

The ratio Mw/Mn of the polyether compound is preferably 1.00 to 1.15, more preferably 1.00 to 1.12, and still more preferably 1.00 to 1.10. In a case where the ratio Mw/Mn is less than or equal to the above-described upper limits, the viscosity of the polyether compound can be suppressed to be low, and the handleability is improved.

The unsaturation degree of the polyether compound is preferably 0.001 to 0.040 meq/g, more preferably 0.002 to 0.030 meq/g, and still more preferably 0.003 to 0.010 meq/g. In a case where the unsaturation degree thereof is less than or equal to the above-described upper limits, satisfactory physical properties are likely to be obtained in a case where the polyether compound is used for the applications described below.

The viscosity of the polyether compound at a measurement temperature of 25°C is preferably 100 to 100,000 mPa·s, more preferably 200 to 80,000 mPa·s, and still more preferably 400 to 60,000 mPa·s.

The polyether compound can be used as a lubricating oil, a raw material for a polyurethane foam, an adhesive, a sealing material, a coating material, or the like. In addition, the polyether compound may be used as a polyether compound containing a reactive silicon group, a prepolymer, or a polyether compound containing a polymerizable unsaturated group by reacting with a compound that can react with a hydroxyl group of the polyether compound.

[Polyether compound containing reactive silicon group]

The polyether compound containing a reactive silicon group (hereinafter, also referred to as "polyether compound A") contains a reactive silicon group represented by Formula 1.

The reactive silicon group has a hydroxyl group bonded to a silicon atom, a halogen atom, or a hydrolyzable group, and can be crosslinked by forming a siloxane bond. The reaction of forming a siloxane bond is promoted by a curing catalyst. The reactive silicon group in the polyether compound A is represented by Formula 1.

$$-SiR_aX_{3-a} \qquad \text{Formula 1}$$

In Formula 1, R represents a monovalent organic group having 1 to 20 carbon atoms, which is an organic group other than a hydrolyzable group.

It is preferable that R represents at least one group selected from the group consisting of a hydrocarbon group having 1 to 20 carbon atoms and a triorganosiloxy group.

R represents preferably at least one group selected from the group consisting of an alkyl group, a cycloalkyl group, an aryl group, an $\alpha$-chloroalkyl group, and a triorganosiloxy group and more preferably at least one selected from the group consisting of a linear or branched alkyl group having 1 to 4 carbon atoms, a cyclohexyl group, a phenyl group, a benzyl group, an $\alpha$-chloromethyl group, a trimethylsiloxy group, a triethylsiloxy group, and a triphenylsiloxy group. Among these, a methyl group or an ethyl group is preferable from the viewpoint that the curing properties of the polyether compound A and the stability of the curable composition are satisfactory. From the viewpoint of a high curing rate of the cured substance, an $\alpha$-chloromethyl group is preferable. From the viewpoint of the availability, a methyl group is particularly preferable.

In Formula 1, X represents a hydroxyl group, a halogen atom, or a hydrolyzable group.

Examples of the hydrolyzable group include an alkoxy group, an acyloxy group, a ketoxymate group, an amino group, an amide group, an acid amide group, an aminooxy group, a sulfanyl group, and an alkenyloxy group.

Among these, an alkoxy group is preferable from the viewpoint of mild hydrolyzability and ease of handling. As the alkoxy group, a methoxy group, an ethoxy group, or an isopropoxy group is preferable, and a methoxy group or an ethoxy group is more preferable. In a case where the alkoxy group is a methoxy group or an ethoxy group, a siloxane bond is quickly formed, a crosslinked structure is easily formed in the cured substance, and the physical property value of the cured substance is likely to be satisfactory.

In Formula 1, a represents an integer of 0 to 2. In a case where a represents 2, R's may be the same as or different from each other. In a case where a represents 1 or less, X's may be the same as or different from each other. In a case where the crosslinking density due to the siloxane bond is low, the modulus of the cured substance is likely to decrease. Therefore, a represents preferably 2 or less and more preferably 1 or less.

Examples of the reactive silicon group represented by Formula 1 include a trimethoxysilyl group, a triethoxysilyl group, a triisopropoxysilyl group, a tris(2-propenyloxy)silyl group, a triacetoxysilyl group, a dimethoxymethylsilyl group, a diethoxymethylsilyl group, a dimethoxyethylsilyl group, a methyldiisopropoxysilyl group, an ($\alpha$-chloromethyl)dimethoxysilyl group, and an ($\alpha$-chloromethyl)diethoxysilyl group. From the viewpoint of obtaining high activity and satisfactory curing properties, a trimethoxysilyl group, a triethoxysilyl group, a dimethoxymethylsilyl group, or a diethoxymethylsilyl group is preferable, and a trimethoxysilyl group or a dimethoxymethylsilyl group is more preferable.

The polyether compound A contains an average of 1.0 or more terminal groups in one molecule and a reactive silicon group represented by Formula 1, and the terminal group is a polyether compound containing a reactive silicon group, an unsaturated group, an isocyanate group, or a hydroxyl group.

The polyether compound A contains an average of 1.0 or more terminal groups in one molecule. From the viewpoint that the tensile strength of the cured substance is higher and the modulus and the elongation are further enhanced, the average number of terminal groups is preferably 1.0 to 8.0, more preferably 1.0 to 6.0, and still more preferably 1.0 to 4.0. The number of terminal groups of the polyether compound A is the same as the number of terminal groups of the polyether compound. The terminal group of the polyether compound A contains any of a reactive silicon group represented by Formula 1, an unsaturated group, an isocyanate group, or a hydroxyl group. The terminal groups may be the same as or different from each other.

The average number of reactive silicon groups represented by Formula 1 per terminal group of the polyether compound A is preferably 0.5 to 2.0 and more preferably 0.60 to 1.94. In a case where the average number of reactive silicon groups is greater than or equal to the above-described lower limits, the crosslinking density due to the siloxane bond is increased, and a satisfactory cured substance having a high modulus can be obtained.

The average number of reactive silicon groups represented by Formula 1 per molecule of the polyether compound A is preferably 0.6 to 8.0, more preferably 0.8 to 6.0, and still more preferably 1.2 to 4.0. In a case where the average number of reactive silicon groups is greater than or equal to the above-described lower limits, the crosslinking density due to the siloxane bond is increased, and a satisfactory cured substance having a high modulus can be obtained.

The Mn of the polyether compound A is preferably 1,000 to 100,000, more preferably 1,500 to 80,000, and particularly preferably 2,000 to 60,000. In a case where the Mn is greater than or equal to the above-described lower limits, the elongation properties of the cured substance are further improved. In a case where the Mn is less than or equal to the above-described upper limits, the viscosity is low, and the workability is satisfactory.

The ratio Mw/Mn of the polyether compound A is preferably 1.00 to 1.50, more preferably 1.00 to 1.45, still more preferably 1.00 to 1.40, and most preferably 1.00 to 1.20. In a case where the ratio Mw/Mn is less than or equal to the above-described upper limits, satisfactory elongation properties are likely to be obtained, the viscosity is decreased, and the workability is enhanced.

The viscosity of the polyether compound A at a measurement temperature of 25°C is preferably 100 to 120,000 mPa·s, more preferably 200 to 100,000 mPa·s, and still more preferably 400 to 80,000 mPa/s. In a case where the viscosity thereof is less than or equal to the above-described upper limits, the handleability is excellent.

[Method of producing polyether compound containing reactive silicon group]

In the method of producing a polyether compound A, the hydroxyl group of the polyether compound is converted into a group containing a reactive silicon group.

Examples of the method of producing the polyether compound A include a production method according to the following method (a1), (b1), or (c1).

Method (a1): a method of converting a hydroxyl group of a polyether compound into an alkenyloxy group having a carbon-carbon double bond at a molecular terminal or an alkynyloxy group having a carbon-carbon triple bond at a molecular terminal, reacting a silylating agent capable of introducing a reactive silicon group -$SiR_aX_{3-a}$ represented by Formula 1 with the carbon-carbon double bond of the alkenyloxy group at the molecular terminal or the carbon-carbon triple bond of the alkynyloxy group at the molecular terminal, and converting the alkenyloxy group or the alkynyloxy group into a group having the reactive silicon group represented by Formula 1

Method (b1): a method of reacting a hydroxyl group of a polyether compound with a silylating agent containing a functional group capable of reacting with the hydroxyl group and a reactive silicon group represented by Formula 1 and converting the hydroxyl group into a group having the reactive silicon group represented by Formula 1

Method (c1): a method of converting a hydroxyl group of a polyether compound into a group having an isocyanate group, reacting the group with a silylating agent containing a functional group capable of reacting with an isocyanate group and a reactive silicon group represented by Formula 1, and converting the hydroxyl group into a group containing the reactive silicon group represented by Formula 1

In the method (a1), an alkali metal salt is allowed to act on a polyether compound to carry out alcoholation, the polyether compound reacts with a halogenated hydrocarbon compound having a carbon-carbon double bond at a molecular terminal or a halogenated hydrocarbon compound having a carbon-carbon triple bond at a molecular terminal, and the hydroxyl group of the polyether compound is converted into an alkenyloxy group having a carbon-carbon double bond at a molecular terminal or an alkynyloxy group having a carbon-carbon triple bond at a molecular terminal.

Examples of the alkali metal salt include sodium hydroxide, sodium alkoxide, potassium hydroxide, potassium alkoxide, lithium hydroxide, lithium alkoxide, cesium hydroxide, and cesium alkoxide.

From the viewpoints of the handleability and the solubility, sodium hydroxide, sodium methoxide, sodium ethoxide, potassium hydroxide, potassium methoxide, or potassium ethoxide is preferable, and sodium methoxide or potassium ethoxide is more preferable. Sodium methoxide is particularly preferable from the viewpoint of availability.

The alkali metal salt may be used in a state of being dissolved in a solvent.

Examples of the halogenated hydrocarbon compound having a carbon-carbon double bond at a molecular terminal include vinyl chloride, allyl chloride, methallyl chloride, vinyl bromide, allyl bromide, methallyl bromide, vinyl iodide, allyl iodide, and methallyl iodide. Among these, allyl chloride or methallyl chloride is preferable.

Examples of the halogenated hydrocarbon compound including a carbon-carbon triple bond at a molecular terminal include propargyl chloride, 1-chloro-2-butyne, 4-chloro-1-butyne, 1-chloro-2-octyne, 1-chloro-2-pentyne, 1,4-dichloro-2-butyne, 5-chloro-1-pentyne, 6-chloro-1-hexyne, propargyl bromide, 1-bromo-2-butyne, 4-bromo-1-butyne, 1-bromo-2-octyne, 1-bromo-2-pentyne, 1,4-dibromo-2-butyne, 5-bromo-1-pentyne, 6-bromo-1-hexyne, propargyl iodide, 1-iodo-2-butyne, 4-iodo-1-butyne, 1-iodo-2-octyne, 1-iodo-2-pentyne, 1,4-diiodo-2-butyne, 5-iodo-1-pentyne, and 6-iodo-1-hexyne. Among these, propargyl chloride, propargyl bromide, or propargyl iodide is preferable.

A halogenated hydrocarbon compound having a carbon-carbon double bond at a molecular terminal and a halogenated hydrocarbon compound having a triple bond at a molecular terminal may be used in combination. The halogenated hydrocarbon compound having a carbon-carbon double bond at a molecular terminal may be used alone or in combination of two or more kinds thereof. The halogenated hydrocarbon compound having a carbon-carbon triple bond at a molecular terminal may be used alone or in combination of two or more kinds thereof.

Next, the silylating agent capable of introducing the reactive silicon group-$SiR_aX_{3-a}$ represented by Formula 1 into the carbon-carbon double bond at the molecular terminal of the alkenyloxy group or the carbon-carbon triple bond at the molecular terminal of the alkynyloxy group reacts with the alkenyloxy group or the alkynyloxy group to convert the alkenyloxy group or the alkynyloxy group into a group having the reactive silicon group represented by Formula 1. Examples of the silylating agent include a compound containing both a group (for example, a sulfanyl group) which can react with an unsaturated group to form a bond and a reactive silicon group represented by Formula 1, and a hydrosilane compound (for example, $HSiR_aX_{3-a}$, R, X, and a each have the same definition as in Formula 1). Specific examples thereof include dimethoxymethylsilane, diethoxymethylsilane, dimethoxyethylsilane, methyldiisopropoxysilane, ($\alpha$-chloromethyl)dimethoxysilane, ($\alpha$-chloromethyl)diethoxysilane, trimethoxysilane, triethoxysilane, triisopropoxysilane, tris(2-propenyloxy)silane, triacetoxysilane, and 3-mercaptopropyltrimethoxysilane. From the viewpoint of obtaining high activity and satisfactory curing properties, trimethoxysilane, dimethoxymethylsilane, or diethoxymethylsilane is preferable, and dimethoxymethylsilane is more preferable.

In the method (b1), the polyether compound reacts with a silylating agent. It is preferable to use an isocyanate silane compound represented by Formula 3 as the silylating agent.

$$OCN\text{-}(CH_2)_n\text{-}SiR_aX_{3-a} \cdots \qquad \text{Formula 3}$$

$-SiR_aX_{3-a}$ in Formula 3 has the same definition as that in Formula 1. n represents an integer of 1 to 8 and preferably 1 to 3.

The hydroxyl group of the polyether compound is converted into a terminal group having a urethane bond (-O-C(=O)NH-) and $-SiR_aX_{3-a}$, which is represented by $-O\text{-}C(=O)NH\text{-}(CH_2)_n\text{-}SiR_aX_{3-a}$, by the reaction between the hydroxyl group of the polyether compound and the isocyanate silane compound.

Examples of the isocyanate silane compound include 3-isocyanate propyltrimethoxysilane, 3-isocyanate propyltriethoxysilane, isocyanate methyltrimethoxysilane, isocyanate methyltriethoxysilane, 3-isocyanate propylmethyldimethoxysilane, 3-isocyanate propylmethyldiethoxysilane, isocyanate methylmethyldimethoxysilane, and isocyanate methylmethyldiethoxysilane.

From the viewpoints of the reactivity with the polyether compound and the handleability, 3-isocyanate propyltrimethoxysilane, 3-isocyanate propyltriethoxysilane, 3-isocyanate propylmethyldimethoxysilane, isocyanate methylmethyldimethoxysilane, and isocyanate methyltrimethoxysilane are preferable as the isocyanate silane compound.

The active hydrogen of the polyether compound reacts with the isocyanate group of the isocyanate silane compound represented by Formula 3 to introduce the reactive silicon group into the polyether compound.

In a case where the active hydrogen-containing group of the polyether compound is a hydroxyl group, a polyether compound A in which a reactive silicon group is bonded to a polyoxyalkylene chain (- $(R^5O)_m$-, where $R^5$ represents an alkylene group, and m represents the number of moles of the oxyalkylene group) via a urethane bond and an organic group is obtained. That is, a linking structure represented by - $(R^5O)_m\text{-}C(=O)NH\text{-}(CH_2)_n\text{-}SiR_aX_{3-a}$ is formed.

This reaction may be carried out in the presence of a urethanization catalyst. The urethanization catalyst is not particularly limited, and a known urethanization catalyst can be appropriately used. Examples thereof include an organic tin compound such as dibutyltin dilaurate or dioctyltin dilaurate, a metal catalyst such as a bismuth compound, and a base catalyst such as an organic amine. The reaction temperature is preferably 20°C to 200°C and more preferably 50°C to 150°C. In addition, it is preferable that the urethanization reaction is performed in an inert gas atmosphere. As the inert gas, nitrogen is preferable.

It is preferable that the molar ratio of the total number of isocyanate groups in the isocyanate silane compound represented by Formula 3 to the total number of active hydrogens in the polyether compound is set according to the number of reactive silicon groups per molecule of the polyether compound A intended to be obtained. It is preferable that the isocyanate silane compound represented by Formula 3 is allowed to react such that the reactive silicon group per molecule of the polyether compound A to be obtained is at least 0.7 or greater.

For example, in a case where the active hydrogen-containing group of the polyether compound is a hydroxyl group, the ratio NCO/OH, which is the molar ratio of the total number of isocyanate groups (NCO) of the isocyanate silane compound represented by Formula 3 to the total number of active hydrogens (the total number of hydroxyl groups) of the polyether compound is preferably 0.7 to 1.0, more preferably 0.8 to 1.0, and still more preferably 0.9 to 1.0. In a case where the ratio NCO/OH is greater than or equal to the above-described lower limits, the cured substance has excellent strength, and in a case where the ratio NCO/OH is less than or equal to the above-described upper limits, the cured substance has excellent elongation.

In the method (c1), the hydroxyl group of the polyether compound reacts with a polyisocyanate compound to convert the hydroxyl group into a monovalent organic group (hereinafter, also referred to as "isocyanate-containing group") having a urethane bond (-O-C(=O)NH-) on a terminal side of a bond to the polyether compound and containing an isocyanate group, and the isocyanate-containing group reacts with a silylating agent containing a functional group capable of reacting with an isocyanate group and a reactive silicon group represented by Formula 1 to obtain a terminal group which is a monovalent organic group (hereinafter, also referred to as "urethane bond and reactive silicon group-containing group") having one or more urethane bonds (-O-C(=O)NH-) and containing a silylating agent residue that has reacted with an isocyanate group.

Hereinafter, a method (c1) in which a diisocyanate compound represented by Formula 4 is used as the polyisocyanate compound, and a compound represented by Formula 5 is used as the silylating agent containing a functional group capable of reacting with an isocyanate group and a reactive silicon group represented by Formula 1 will be described, but the present invention is not limited thereto.

$$OCN-R^3-NCO \cdots \qquad \text{Formula 4}$$

$R^3$ in Formula 4 represents a divalent organic group.

$$W-R^4-SiR_aX_{3-a} \cdots \qquad \text{Formula 5}$$

In Formula 5, W represents a functional group (a group having one or more active hydrogens) capable of reacting with a monovalent isocyanate group, $R^4$ represents a divalent organic group, and $-SiR_aX_{3-a}$ has the same definition as that in Formula 1.

In a case where the diisocyanate compound represented by Formula 4 reacts with the hydroxyl group of the polyether compound, the isocyanate-containing group is a group represented by $-O-C(=O)NH-R^3-NCO$. In a case where the isocyanate-containing group reacts with the silylating agent represented by Formula 5, the urethane bond and the reactive silicon group-containing group are groups represented by $-O-C(=O)NH-R^3-NHC(=O)-W'-R^4-SiR_aX_{3-a}$ (here, W' represents a divalent group obtained by removing one active hydrogen from W). For example, in a case where W represents a hydroxyl group, the urethane bond and the reactive silicon group-containing group are groups represented by $-O-C(=O)NH-R^3-NHC(=O)-O-R^4-SiR_aX_{3-a}$. In this case, the urethane bond and the reactive silicon group-containing group have two urethane bonds. In addition, for example, in a case where W represents an amino group ($-NH_2$), the urethane bond and the reactive silicon group-containing group are groups represented by $-O-C(=O)NH-R^3-NHC(=O)-NH-R^4-SiR_aX_{3-a}$.

It is preferable that $R^3$ represents a divalent organic group having 2 to 20 carbon atoms, and examples thereof include an alkylene group, a cycloalkylene group, a bicycloalkylene group, a monocyclic or polycyclic divalent aromatic hydrocarbon group, a divalent group obtained by removing two hydrogen atoms in a cycloalkane having an alkyl group as a substituent, a divalent group obtained by removing two hydrogen atoms in an aromatic hydrocarbon having an alkyl group as a substituent, a divalent group obtained by removing two hydrogen atoms in two or more cycloalkanes which are bonded via an alkylene group and may have an alkyl group as a substituent, and a divalent group obtained by removing two hydrogen atoms in two or more aromatic hydrocarbons which are bonded via an alkylene group and may have an alkyl group as a substituent.

Examples of the diisocyanate compound represented by Formula 4 and other polyisocyanate compounds include an aromatic polyisocyanate, a non-yellowing aromatic polyisocyanate (refers to a compound containing no isocyanate group directly bonded to a carbon atom constituting an aromatic ring), an aliphatic polyisocyanate, an alicyclic polyisocyanate, and a urethane modified product, a biuret modified product, an allophanate modified product, a carbodiimide modified product, and an isocyanurate modified product, which are obtained from a polyisocyanate.

Examples of the aromatic polyisocyanate include naphthalene-1,5-diisocyanate, polyphenylene polymethylene polyisocyanate, 4,4'-diphenylmethane diisocyanate, 2,4-tolylene diisocyanate, and 2,6-tolylene diisocyanate.

Examples of the non-yellowing aromatic polyisocyanate include xylylene diisocyanate and tetramethylxylylene diisocyanate.

Examples of the aliphatic polyisocyanate include hexamethylene diisocyanate, 2,2,4-trimethyl-hexamethylene diisocyanate, and 2,4,4-trimethyl-hexamethylene diisocyanate.

Examples of the alicyclic polyisocyanate include isophorone diisocyanate and 4,4'-methylenebis(cyclohexyl isocyanate).

The polyisocyanate compound is preferably a polyisocyanate compound containing two isocyanate groups, more preferably hexamethylene diisocyanate, isophorone diisocyanate, 4,4'-diphenylmethane diisocyanate, 2,4-tolylene diisocyanate, or 2,6-tolylene diisocyanate, and still more preferably tolylene diisocyanate from the viewpoint of easily obtaining the tensile strength of the cured substance. The polyisocyanate compound may be used alone or in combination of two or more kinds thereof.

$R^4$ in the silylating agent containing a functional group capable of reacting with an isocyanate group represented by Formula 5 and $-SiR_aX_{3-a}$ represents preferably a divalent organic group having 1 to 20 carbon atoms, more preferably a group obtained by removing two hydrogen atoms from an aromatic hydrocarbon having 6 to 10 carbon atoms, a group obtained by removing two hydrogen atoms from an aromatic hydrocarbon having 6 to 10 carbon atoms, which is substituted with an alkyl group having 1 to 4 carbon atoms, a group obtained by removing two hydrogen atoms from a cyclic hydrocarbon having 3 to 10 carbon atoms, or a group obtained by removing two hydrogen atoms from a linear hydrocarbon having 1 to 12 carbon atoms, still more preferably a group obtained by removing two hydrogen atoms from a linear hydrocarbon having 1 to 8 carbon atoms, and particularly preferably a group obtained by removing two hydrogen atoms from a linear hydrocarbon having 1 to 6 carbon atoms.

W represents preferably a group having one or two active hydrogens, which is selected from a hydroxyl group, a carboxy group, a sulfanyl group, an amino group, and an amino group in which one hydrogen atom is substituted with an alkyl group having 1 to 6 carbon atoms, preferably a hydroxyl group, a sulfanyl group, an amino group, a methylamino group, an ethylamino group, or a butylamino group, and more preferably a hydroxyl group, an amino group, a methylamino group, an ethylamino group, or a butylamino group.

In a case of the method (b1) and the method (c1), the obtained polyether compound A is formed by the reactive silicon group via one or more organic groups represented by Formula (i). That is, the polyether compound A obtained by the method (b1) and the method (c1) contains one or more organic groups represented by Formula (i). The polyether compound A obtained by the method (b1) contains only one organic group represented by Formula (i), and the polyether compound A obtained by the method (c1) contains two or more organic groups represented by Formula (i).

$$-C(=O)NH- \qquad \text{Formula (i)}$$

The organic group (i) is a divalent group derived from a urethane bond or a urea bond. In a case where the isocyanate silane compound represented by Formula 3 is used as the silylating agent, the number of the organic groups (i) is one.

It is preferable that the organic group (i) forms a polyoxyalkylene chain and a urethane bond (-O-C(=O)NH-, -O- represents an oxygen atom at a terminal of the polyoxyalkylene chain). That is, in the polyether compound A, it is preferable that one organic group (i) is present between the polyoxyalkylene chain and the reactive silicon group. In a case where the polyether compound A is produced by the above-described method (b1), the number of organic groups represented by Formula (i) included in the polyether compound A is one. In a case where the polyether compound A is produced by the method (b1), the polyether compound A having a high silylation ratio is likely to be obtained. In the case where the polyether compound A is produced by the method (b1), the polyether compound A having a narrow molecular weight distribution is likely to be obtained. Since the viscosity of the polyether compound is suppressed, the workability is enhanced.

In a case where the number of isocyanate groups and the number of reactive silicon groups contained in the isocyanate silane compound represented by Formula 3 are each one, the number of reactive silicon groups per molecule of the polyether compound A is the same as the number of groups (i) per molecule.

The silylation ratio of the polyether compound A is preferably 50% to 100% by mole and more preferably 60% to 98% by mole. In a case where the silylation ratio is greater than or equal to the lower limits of the above-described ranges, the cured substance has excellent tensile strength and a high modulus.

In a case where a curable composition contains two or more kinds of polyether compounds A, the average silylation ratio of the entire polyether compound A may be in the above-described ranges.

[Curable composition containing polyether compound containing reactive silicon group]

The polyether compound A is used in a curable composition. The curable composition is obtained by mixing the polyether compound A with other necessary components. The polyether compound A may be used alone or in combination of two or more kinds thereof.

The content of the polyether compound containing a reactive silicon group is preferably 1% to 90% by mass, more preferably 10% to 80% by mass, and still more preferably 20% to 70% by mass with respect to the total mass of the curable composition. In a case where the content thereof is less than or equal to the upper limits of the above-described ranges, the tensile strength of the cured substance is more excellent, and the elongation properties are further enhanced.

Examples of the other components contained in the curable composition include a curable compound other than the polyether compound A such as an epoxy resin, an epoxy resin curing agent, a curing catalyst (silanol condensation catalyst), a filler, a plasticizer, a thixotropy imparting agent, a stabilizer, an adhesiveness imparting agent, a physical property adjusting agent, a dewatering agent, an adhesiveness imparting resin, a reinforcing material such as a filler, a surface modifier, a flame retardant, a foaming agent, a solvent, and a silicate.

As the other components, known components in the related art described in PCT International Publication Nos. WO2013/180203, WO2014/192842, and WO2016/002907, Japanese Unexamined Patent Application, First Publication Nos. 2014-88481, 2015-10162, 2015-105293, 2017-039728, 2017-214541, and the like can be used in combination without limitation. Each component may be used in combination of two or more kinds thereof.

The curable composition may be a one-liquid type curable composition in which all the polyether compound A and other components are blended in advance and stored in a sealed state and cured by moisture in the air after construction, or a two-liquid type curable composition in which at least a main agent composition containing the polyether compound A and at least a curing agent composition containing a curing catalyst are stored separately and the curing agent composition and the main agent composition are mixed before use.

It is preferable that the one-liquid type curable composition does not contain moisture. It is preferable that the blended components containing moisture are dewatered and dried in advance or dewatered under reduced pressure during blending and kneading.

In the two-liquid type curable composition, the curing agent composition may contain water, and the main agent composition is unlikely to be gelated even in a case of containing a small amount of water, but it is preferable that the blended components are dewatered and dried in advance from the viewpoint of storage stability.

In order to improve storage stability, a dewatering agent may be added to the one-liquid type curable composition or the two-liquid type main agent composition.

Suitable examples of the applications of the curable composition containing the polyether compound A include an adhesive, a sealing material (for example, an elastic sealing material for construction, a sealing material for multilayer glass, a sealing material for rust prevention and waterproofing of a glass end part, a sealing material for a solar cell back surface, a sealing material for a building, a sealing material for a marine vessel, a sealing material for an automobile, or a sealing material for a road), and an electrical insulating material (insulating coating material for an electric wire or a cable).

[Prepolymer]

A prepolymer (hereinafter, also referred to as "polyether compound B") is a reactant of a polyether compound and a polyisocyanate. A urethane bond is formed between the polyether compound and the polyisocyanate by a urethanization reaction between a hydroxyl group of the polyether compound and an isocyanate group of the polyisocyanate. Among isocyanate groups in the polyisocyanate unit introduced into the polyether compound B, an isocyanate group remaining unreacted with the hydroxyl group of the polyether compound B becomes an isocyanate group at the molecular terminal of the polyether compound B. In addition, among the hydroxyl groups in the polyether compound unit, the hydroxyl group remaining unreacted with the isocyanate group of the polyisocyanate becomes the hydroxyl group at the molecular terminal of the polyether compound B. That is, the group at the molecular terminal of the polyether compound B includes any one or both of a hydroxyl group and an isocyanate group.

The Mn of the polyether compound B is preferably 1,000 to 1,000,000, more preferably 1,500 to 500,000, and still more preferably 2,000 to 100,000. In a case where the Mn is greater than or equal to the above-described lower limits, the flexibility is sufficiently imparted in a case where the polyether compound is used as an adhesive or a coating material, and satisfactory elongation properties are obtained. In a case where the Mn is less than or equal to the above-described upper limits, the viscosity of the polyether compound C can be suppressed to be low, and the handleability is improved.

The ratio Mw/Mn of the polyether compound B is preferably 1.00 to 1.50, more preferably 1.00 to 1.45, and still more preferably 1.00 to 1.40. In a case where the ratio Mw/Mn is less than or equal to the above-described upper limits, satisfactory elongation properties are likely to be obtained, the viscosity is decreased, and the workability is enhanced.

In a case where the molecular terminal of the polyether compound B is an isocyanate group, the content of the isocyanate group is preferably 0.1% to 20% by mass, more preferably 0.5% to 18% by mass, and still more preferably 1% to 15% by mass with respect to the total mass of the polyether compound B. In a case where the content of the isocyanate group is greater than or equal to the above-described lower limits, the tensile strength of the cured substance is likely to be improved. In a case where the content of the isocyanate group is less than or equal to the above-described upper limits, gelation is less likely to occur during the reaction.

The content of the urethane bond is preferably 0.01% to 40% by mass, more preferably 0.1% to 30% by mass, and still more preferably 1% to 15% by mass with respect to the total mass of the polyether compound B.

The viscosity of the polyether compound B at a measurement temperature of 25°C is preferably 100 to 100,000 mPa·s, more preferably 200 to 50,000 mPa·s, and still more preferably 500 to 30,000 mPa/s. In a case where the viscosity thereof is less than or equal to the above-described upper limits, the handleability is excellent.

[Method of producing prepolymer]

In the method of producing a polyether compound B, a polyether compound reacts with a polyisocyanate. A urethanization catalyst may be used as necessary. The polyether compound may be used alone or in combination of two or more kinds thereof.

Examples of the polyisocyanate include an aliphatic polyisocyanate, an alicyclic polyisocyanate, an aromatic polyisocyanate, and an aromatic aliphatic polyisocyanate. The number of isocyanate groups contained in the polyisocyanate is preferably 2 or 3 and more preferably 2.

Examples of the aliphatic polyisocyanate include a linear aliphatic polyisocyanate such as tetramethylene diisocyanate, dodecamethylene diisocyanate, or hexamethylene diisocyanate, and a branched aliphatic polyisocyanate such as 2,2,4-trimethylhexamethylene diisocyanate, 2,4,4-trimethylhexamethylene diisocyanate, lysine diisocyanate, 2-methylpentane-1,5-diisocyanate, or 3-methylpentane-1,5-diisocyanate.

Examples of the alicyclic polyisocyanate include isophorone diisocyanate (3-isocyanatomethyl-3,5,5-trimethylcyclohexyl isocyanate, IPDI), hydrogenated xylylene diisocyanate, 4,4'-dicyclohexylmethane diisocyanate, 1,4-cyclohexane diisocyanate, methylcyclohexylene diisocyanate, and 1,3-bis(isocyanatomethyl)cyclohexane.

Examples of the aromatic polyisocyanate include tolylene diisocyanate (TDI), 2,2'-diphenylmethane diisocyanate, 2,4'-diphenylmethane diisocyanate, 4,4'-diphenylmethane diisocyanate (diphenylmethane 4,4'-diisocyanate, MDI), 4,4'-dibenzyl diisocyanate, 1,5-naphthylene diisocyanate, xylylene diisocyanate, 1,3-phenylene diisocyanate, and 1,4-phenylene diisocyanate.

Examples of the aromatic aliphatic polyisocyanate include dialkyldiphenylmethane diisocyanate, tetraalkyldiphenylmethane diisocyanate, and $\alpha,\alpha,\alpha,\alpha$-tetramethylxylylene diisocyanate.

As the polyisocyanate, alicyclic polyisocyanate or aromatic polyisocyanate is preferable, and IPDI, MDI, or TDI is more preferable.

The polyisocyanate may be used alone or in combination of two or more kinds thereof.

The functional group of the polyether compound B at the molecular terminal can be controlled by adjusting the molar ratio of the total amount of the isocyanate group of the polyisocyanate to the total amount of the hydroxyl group of the polyether compound (hereinafter, also referred to as "ratio NCO/OH"). For example, in a case of producing the polyether compound B containing an isocyanate group at the molecular terminal, the ratio NCO/OH is preferably 2 to 10, more preferably 2 to 8, still more preferably 2 to 7, and particularly preferably 2 to 5. In a case of producing the polyether compound B containing a hydroxyl group at the molecular terminal, the ratio NCO/OH is preferably 0.1 to 0.8, more preferably 0.2 to 0.7, and still more preferably 0.3 to 0.6.

As the urethanization catalyst, one or more selected from a tertiary amine compound and an organic metal compound are preferable. In a case where a highly reactive polyisocyanate is used, the urethanization catalyst may not be necessarily used.

Examples of the tertiary amine compound include triethylamine, triethylenediamine, and 1,8-diazabicyclo(5,4,0)-undecene-7.

As the organometallic compound, one or more selected from a tin-based compound and a non-tin-based compound are preferable.

Examples of the tin-based compound include dibutyltin dichloride, dibutyltin oxide, dibutyltin dibromide, dibutyltin dimaleate, dibutyltin dilaurate, dibutyltin diacetate, dibutyltin sulfide, tributyltin sulfide, tributyltin oxide, tributyltin acetate, triethyltin ethoxide, tributyltin ethoxide, dioctyltin oxide, tributyltin chloride, tributyltin trichloroacetate, and tin 2-ethylhexanoate.

Examples of the non-tin-based compound include a titanium-based compound such as dibutyltitanium dichloride, tetrabutyl titanate, or butoxytitanium trichloride, a lead-based compound such as lead oleate, lead 2-ethylhexanoate, lead benzoate, or lead naphthenate, an iron-based compound such as iron 2-ethylhexanoate or iron acetylacetonate, a cobalt-based compound such as cobalt benzoate or cobalt 2-ethylhexanoate, a zinc-based compound such as zinc naphthenate or zinc 2-ethylhexanoate, and a zirconium-based compound such as zirconium naphthenate.

The urethanization catalyst may be used alone or in combination of two or more kinds thereof.

The amount of the urethanization catalyst to be used in a case where the urethanization catalyst is used is, for example, preferably 0.001 to 1.0 parts by mass with respect to 100 parts by mass of the polyether compound.

A solvent can be used as necessary for the production of the polyether compound B.

As the solvent, one or more selected from a ketone such as acetone or methyl ethyl ketone, an ester such as ethyl acetate, and an aromatic hydrocarbon such as toluene or xylene are preferable.

The solvent may be used alone or in combination of two or more kinds thereof.

The amount of the solvent to be used in a case where the solvent is used is not particularly limited, but is preferably 100 to 1,000 parts by mass with respect to 100 parts by mass of the polyether compound.

Examples of the method of producing the polyether compound B include a method of mixing a polyether compound, a polyisocyanate, and a urethanization catalyst, and a solvent as necessary. In addition, a method of adding a polyisocyanate dropwise to a mixed solution obtained by mixing a polyether compound and, as necessary, a urethanization catalyst and a solvent may also be used.

The reaction temperature is preferably 50°C to 120°C and more preferably 50°C to 100°C. In a case where the reaction temperature is higher than or equal to the above-described lower limits, the urethanization reaction is likely to be promoted. In a case where the reaction temperature is lower than or equal to the above-described upper limits, a side reaction other than the urethane reaction is likely to be suppressed.

In a case where the urethanization catalyst is used, it is preferable that a reaction terminator is added after the completion of the reaction to inactivate the urethanization catalyst. Examples of the reaction terminator include acetylacetone.

The reaction terminator may be used alone or in combination of two or more kinds thereof.

In a case where the unreacted polyisocyanate remains after the reaction, it is preferable that the polyisocyanate is removed by distillation to purify the polyether compound B.

[Polyurethane composition containing prepolymer]

The polyether compound B is used in the polyurethane composition. The polyurethane composition is obtained by mixing the polyether compound B with other optional components as necessary. The polyether compound B may be used alone or in combination of two or more kinds thereof.

The content proportion of the polyether compound B in the total mass of the polyurethane composition is 15% to 100% by mass and preferably 30% to 100% by mass. The polyurethane composition may further contain optional components other than the polyether compound B.

Examples of the optional components contained in the polyurethane composition include a catalyst, a filling material, a plasticizer, a stabilizer, a pigment, a fiber, a dye, a desiccant, an adhesiveness improver, a rheology modifier, a solvent, a natural resin, a non-reactive polymer, and other additives. The optional components may be used alone or in combination of two or more kinds thereof. In a case where the polyurethane composition contains the optional components, the content of the optional components is preferably greater than 0% by mass and 50% by mass or less with respect to the total mass of the polyurethane composition.

A cured substance can be produced by reacting a polyurethane composition with a curing agent. In a case where the molecular terminal of the polyether compound B is an isocyanate group, a curing agent having active hydrogen is used. It is preferable that the active hydrogen-containing group contained in the curing agent is a hydroxyl group. In the case where the molecular terminal of the polyether compound B is a hydroxyl group, a curing agent having an isocyanate group is used.

In the case where the molecular terminal of the polyether compound B is an isocyanate group, the isocyanate group of the polyether compound B contained in the polyurethane composition and the active hydrogen-containing group (for example, a hydroxyl group) of the curing agent undergo a urethanization reaction, and thus the polyether compound B is crosslinked by a urethane bond. Therefore, a cured substance is obtained. In the case where the molecular terminal of the polyether compound B is a hydroxyl group, the hydroxyl group of the polyether compound B contained in the polyurethane composition and the isocyanate group of the curing agent undergo a urethanization reaction, and thus the polyether compound B is crosslinked by a urethane bond. Therefore, a cured substance is obtained.

In a case of a curing agent containing a hydroxyl group, the number of hydroxyl groups in the curing agent is preferably 2 or more, more preferably 2 to 4, and still more preferably 2 or 3. Example of the curing agent containing two hydroxyl groups include water.

In a case of a curing agent containing an isocyanate group, the number of isocyanate groups in the curing agent is preferably 2 or more, more preferably 2 to 4, and still more preferably 2 or 3.

Examples of the curing agent containing a hydroxyl group include the initiator described in the section of the method of producing a polyether compound, and water.

Examples of the curing agent containing an isocyanate group include the above-described polyisocyanate.

In a case where the molecular terminal of the polyether compound B is an isocyanate group, the molar ratio of the total amount of the isocyanate group of the polyether compound B to the total amount of the hydroxyl group of the curing agent is preferably greater than 1 and more preferably 1.01 to 1.20.

In a case where the molecular terminal of the polyether compound B is a hydroxyl group, the molar ratio of the total amount of the hydroxyl group of the polyether compound B to the total amount of the isocyanate group of the curing agent is preferably greater than 0.8 and more preferably 0.81 to 1.20.

A method of mixing the polyurethane composition and the curing agent may be of a one-liquid type in which a polyurethane composition, which is a one-liquid type composition obtained by blending all the components other than the curing agent in advance, is sealed and stored and cured by moisture in the air after construction, or a two-liquid type in which a polyurethane composition, which is a main agent composition, and a curing agent composition containing at least a curing agent are stored separately, and the curing agent composition and the main agent composition are mixed with each other before use. In a case of the one-liquid type, moisture (water) in the air functions as a curing agent. That is, in a case where the molecular terminal of the polyether compound B is an isocyanate group, a one-liquid type is preferable.

It is preferable that the one-liquid type composition does not contain moisture. It is preferable that the blended components containing moisture are dewatered and dried in advance or dewatered under reduced pressure during the preparation of the one-liquid type composition.

In a case of the two-liquid type, the curing agent composition may contain water, and the main agent composition is unlikely to be gelated even in a case of containing a small amount of moisture, but it is preferable that the blended components are dewatered and dried in advance from the viewpoint of storage stability. In a case of the two-liquid type, the curing agent composition may contain optional components.

In order to improve storage stability, a dewatering agent may be added to the one-liquid type composition or the two-liquid type main agent composition.

The reaction temperature is preferably 20°C to 40°C. In the case of the one-liquid type, the relative humidity at the reaction temperature is preferably 40% to 60%.

Suitable examples of the applications of the polyurethane composition containing the polyether compound B include an adhesive, a sealing material (for example, an elastic sealing material for construction, a sealing material for multilayer glass, a sealing material for rust prevention and waterproofing of a glass end part, a sealing material for a solar cell back surface, a sealing material for a building, a sealing material for a marine vessel, a sealing material for an automobile, or a sealing material for a road), a coating material (applications of a coating material), and an electrical insulating material (insulating coating material for an electric wire or a cable).

The adhesive is suitable as an elastic adhesive for bonding plastics to each other, bonding metals to each other, and bonding plastics to metals. In addition, the polyurethane composition is also suitable as an elastic sealing material or an elastic coating material.

[Polyether compound containing polymerizable unsaturated group]

A polyether compound containing a polymerizable unsaturated group (hereinafter, also referred to as "polyether compound C") is a reactant of a polyether compound and a compound containing a polymerizable unsaturated group. Examples of the polymerizable unsaturated group include a carbon-carbon double bond at a molecular terminal. As the polymerizable unsaturated group, a (meth)acryloyl group or a (meth)acryloyloxy group is preferable. The term "(meth) acryloyl group" is a generic term for an acryloyl group and a methacryloyl group. The term "(meth)acryloyloxy group" is a generic term for an acryloyloxy group and a methacryloyloxy group.

The polyether compound C contains an average of 1.0 or more terminal groups in one molecule. From the viewpoint that the crosslinking reaction or the curing properties are further enhanced during resinification, the average number of terminal groups is preferably 1.0 to 8.0, more preferably 1.0 to 6.0, and still more preferably 1.0 to 4.0. The number of terminal groups of the polyether compound C is the same as the number of terminal groups of the polyether compound.

The average number of polymerizable unsaturated groups per terminal group of the polyether compound C is preferably 0.5 to 2.0 and more preferably 0.8 to 1.2. In a case where the average number of the polymerizable unsaturated groups is greater than or equal to the above-described lower limits, the crosslinking reaction and the curing properties during resinification are likely to be enhanced. In a case where the average number of the polymerizable unsaturated groups is less than or equal to the above-described upper limits, the flexibility is sufficiently imparted to the resin, and satisfactory elongation properties are likely to be obtained.

The average number of polymerizable unsaturated groups per molecule of the polyether compound C is preferably 1.0 to 8.0, more preferably 1.0 to 6.0, and still more preferably 1.0 to 4.0. In a case where the average number of the polymerizable unsaturated groups is greater than or equal to the above-described lower limits, the crosslinking reaction and the curing properties during resinification are likely to be enhanced. In a case where the average number of the polymerizable unsaturated groups is less than or equal to the above-described upper limits, the flexibility is sufficiently imparted to the resin, and satisfactory elongation properties are likely to be obtained.

The Mn of the polyether compound C is preferably 1,000 to 1,000,000, more preferably 1,500 to 500,000, and still more preferably 2,000 to 100,000. In a case where the Mn thereof is greater than or equal to the above-described lower limits, the flexibility is sufficiently imparted in a case where the polyether compound is used as an adhesive or a coating material, and satisfactory elongation properties are likely to be obtained. In a case where the Mn is less than or equal to the above-described upper limits, the viscosity of the polyether compound C can be suppressed to be low, and the handleability is improved.

The ratio Mw/Mn of the polyether compound C is preferably 1.00 to 1.50, more preferably 1.00 to 1.45, and still more preferably 1.00 to 1.40. In a case where the ratio Mw/Mn is less than or equal to the above-described upper limits, satisfactory elongation properties are likely to be obtained, the viscosity is decreased, and the workability is enhanced.

In a case where the polyether compound C has a urethane bond, the content of the urethane bond is preferably 0.01% to 40% by mass, more preferably 0.1% to 30% by mass, and still more preferably 1% to 15% by mass with respect to the total mass of the polyether compound C.

The viscosity of the polyether compound C at a measurement temperature of 25°C is preferably 100 to 100,000 mPa·s, more preferably 200 to 50,000 mPa·s, and still more preferably 500 to 30,000 mPa/s. In a case where the viscosity thereof is less than or equal to the above-described upper limits, the handleability is excellent.

[Method of producing polyether compound containing polymerizable unsaturated group]

In the method of producing the polyether compound C, a hydroxyl group of the polyether compound is converted into a group containing a polymerizable unsaturated group.

Examples of the method of producing the polyether compound C include a production method according to the following method (a2), (b2), or (c2).

Method (a2): a method of reacting a hydroxyl group of a polyether compound with a compound (hereinafter, also referred to as "compound 1") containing a functional group capable of reacting with a hydroxyl group and a polymerizable unsaturated group and converting the hydroxyl group into a group containing a polymerizable unsaturated group

Method (b2): a method of reacting a hydroxyl group of a polyether compound with a polyisocyanate to obtain a prepolymer in which the molecular terminal is an isocyanate group, reacting the prepolymer with a compound (hereinafter, also referred to as "compound 2") containing a functional group capable of reacting with an isocyanate group and a polymerizable unsaturated group, and converting the hydroxyl group into a group containing a polymerizable unsaturated group

Method (c2): a method of reacting a hydroxyl group of a polyether compound with a polyisocyanate to obtain a prepolymer in which the molecular terminal is a hydroxyl group, reacting the prepolymer with the compound 1, and converting the hydroxyl group into a group containing a polymerizable unsaturated group

As the prepolymer in which the molecular terminal is an isocyanate group in the method (b2), the above-described polyether compound B in which the molecular terminal is an isocyanate group can be used. As the prepolymer in which the molecular terminal is a hydroxyl group in the method (c2), the above-described polyether compound B in which the molecular terminal is a hydroxyl group can be used.

The compound 1 is preferably a compound containing one isocyanate group and a polymerizable unsaturated group, more preferably a (meth)acrylate containing one isocyanate group, still more preferably isocyanate alkyl (meth)acrylate, particularly preferably isocyanate alkyl (meth)acrylate having 8 or less carbon atoms excluding carbon atoms in the isocyanate group of the isocyanate alkyl group, and most preferably isocyanate alkyl (meth)acrylate having 4 or less carbon atoms excluding carbon atoms in the isocyanate group of the isocyanate alkyl group. The term "(meth)acrylate" is a generic term for acrylate and methacrylate.

Examples of the compound 1 include 2-isocyanatoethyl (meth)acrylate and isocyanatomethyl (meth)acrylate. Examples of a commercially available product include KARENZ-AOI and KARENZ-MOI (both product names, manufactured by Showa Denko K.K.).

The compound 2 is preferably a compound containing an active hydrogen-containing group such as a hydroxyl group or an amino group and a polymerizable unsaturated group, preferably a (meth)acrylate containing an active hydrogen-containing group such as a hydroxyl group or an amino group, more preferably hydroxyalkyl (meth)acrylate or hydroxycycloalkyl (meth)acrylate containing one hydroxyl group, and particularly preferably hydroxyalkyl (meth)acrylate containing an alkyl group having 8 or less carbon atoms.

Examples of the compound 2 include 2-hydroxyethyl (meth)acrylate, 2-hydroxypropyl (meth)acrylate, 2-hydroxybutyl (meth)acrylate, 4-hydroxybutyl (meth)acrylate, and 6-hydroxyhexyl (meth)acrylate. Examples of a commercially available product include LIGHT ESTER HO-250 (N), LIGHT ESTER HOP (N), LIGHT ESTER HOA (N), LIGHT ESTER HOP-A (N), LIGHT ESTER HOB (N) (all product names, manufactured by KYOEISHA CHEMICAL Co., Ltd.), and 4-HBA (product name, manufactured by OSAKA ORGANIC CHEMICAL INDUSTRY LTD.).

In a case where the composition containing the polyether compound C is a photocurable composition, it is preferable that all the polymerizable unsaturated groups contained in the polyether compound C are acryloyloxy groups. Such a polyether compound C can be obtained by using a compound in which the polymerizable unsaturated group in the compound 1 and the compound 2 is an acryloyloxy group.

In the methods (a2) and (c2), the molar ratio of the amount of the compound 1 to be used to the amount of the hydroxyl group in the polyether compound or the amount of the hydroxyl group in the prepolymer in which the molecular terminal is a hydroxyl group is preferably 0.8 to 1.2, more preferably 0.9 to 1.1, and still more preferably 0.95 to 1.05.

In the method (b2), the molar ratio of the amount of the compound 2 to be used to the amount of the isocyanate group in the prepolymer in which the molecular terminal is an isocyanate group may be greater than 1. The excess compound 2 remains unreacted, but may be contained in the composition containing the polyether compound C. The molar ratio is preferably 0.8 to 1.5, more preferably 0.9 to 1.3, and still more preferably 0.95 to 1.1.

In the methods (a2), (b2), and (c2), the reaction between the hydroxyl group and the functional group capable of reacting with the hydroxyl group and the reaction between the isocyanate group and the functional group capable of reacting with the isocyanate group can be carried out by employing a known method in the related art. In a case where the reaction is a reaction between a hydroxyl group and an isocyanate group, the above-described urethanization catalyst may be used as necessary.

[Composition containing polyether compound containing polymerizable unsaturated group]

The polyether compound C is used in the curable composition. The curable composition is obtained by mixing the polyether compound C with other optional components. The polyether compound C may be used alone or in combination of two or more kinds thereof.

The content of the polyether compound C is preferably 65% by mass or greater and more preferably 75% by mass or greater with respect to the total mass of the curable composition.

The curable composition may contain a compound containing a polymerizable unsaturated group other than the polyether compound C (hereinafter, also referred to as "other compounds"), a photopolymerization initiator, and other components, in addition to the polyether compound C.

Examples of the other compounds include the following other compounds 1 and other compounds 2.

The other compound 1 is a compound other than the polyether compound C, and is preferably a compound containing one (meth)acryloyloxy group and one or more hydroxyl groups and preferably a compound containing one or two hydroxyl groups. The other compound 1 may be a compound having a polyoxyalkylene chain, and in this case, a compound having no urethane bond and no urea bond (compound produced by a method other than the methods (a2) to (c2)) is preferable. The other compound may be a compound having an aliphatic polyester chain obtained by ring-opening addition polymerization of a lactone.

Examples of the other compound 1 include hydroxyalkyl (meth)acrylate, dihydroxyalkyl (meth)acrylate, lactone-modified hydroxyalkyl (meth)acrylate, polyoxyalkylene diol mono(meth)acrylate, and a (meth)acrylic acid-monoepoxide adduct.

The number of carbon atoms in the hydroxyalkyl portion of the hydroxyalkyl (meth)acrylate is preferably 2 to 8 and more preferably 2 to 6. The number of carbon atoms in the dihydroxyalkyl portion of the dihydroxyalkyl (meth)acrylate is preferably 2 to 8 and more preferably 2 to 6. Specific examples of the hydroxyalkyl (meth)acrylate include the hydroxyalkyl (meth)acrylate described as the compound 2. Among these, 4-hydroxybutyl acrylate or 6-hydroxyhexyl acrylate is preferable from the viewpoints of the flexibility and low volatility.

Examples of the lactone-modified hydroxyalkyl (meth)acrylate include a compound obtained by performing ring-opening addition of a lactone on the hydroxyalkyl (meth)acrylate described as the compound 2. The number of times of addition of the lactone is preferably 1 to 3. Examples of the lactone include ε-caprolactone, γ-butyrolactone, and γ-valerolactone.

As the (meth)acrylic acid-monoepoxide adduct, a reaction product of (meth)acrylic acid with glycidyl ether or glycidyl ester is preferable, and examples thereof include (meth)acrylic acid and phenylglycidyl ether.

Among these, hydroxyalkyl (meth)acrylate and a (meth)acrylic acid-monoepoxide adduct are preferable from the viewpoints of industrial availability and less impurities.

The other compound 1 may be used alone or in combination of two or more kinds thereof.

In a case where the curable composition contains the other compound 1, the content of the other compound 1 is preferably 1% to 20% by mass and more preferably 1% to 15% by mass with respect to the total mass of the curable composition. In a case where the content of the other compound 1 is greater than or equal to the above-described lower limits, the effect of improving the adhesiveness is likely to be sufficiently obtained by the addition of the other compound 1. In a case where the content of the other compound 1 is less than or equal to the above-described upper limits, satisfactory physical properties in terms of low curing shrinkage rate are likely to be obtained.

The other compound 2 is a compound other than the polyether compound C and the other compound 1, and is preferably a compound containing one (meth)acryloyloxy group and having no urethane bond.

As the other compound 2, a (meth)acrylate containing a long-chain alkyl group having 8 or more carbon atoms or a (meth)acrylate containing an amide group is preferable. Examples of the other compound 2 other than the above-described compounds include alkyl (meth)acrylate having 7 or less carbon atoms, alkoxyalkyl (meth)acrylate, and (meth)acrylate containing an aliphatic cyclic hydrocarbon group.

In a case where the curable composition contains a long-chain alkyl (meth)acrylate having 8 or more carbon atoms, air bubbles in the cured substance are likely to disappear in a case of forming a cured substance by a method (vacuum sealing pressure increase curing method) of sealing the curable composition under reduced pressure and curing the curable composition in an atmosphere at a higher pressure. The number of carbon atoms in the long-chain alkyl group is preferably 8 to 22 and more preferably 8 to 18.

Examples of the long-chain alkyl (meth)acrylate include lauryl (meth)acrylate, isostearyl (meth)acrylate, and isodecyl (meth)acrylate. Among these, lauryl acrylate or isostearyl acrylate is preferable from the viewpoints of the flexibility, low viscosity, and low crystallinity.

As the (meth)acrylate containing an amide group, a compound in which a hydrogen atom bonded to a nitrogen atom of (meth)acrylamide is substituted with a hydrocarbon group such as an alkyl group or a divalent organic group is preferable from the viewpoint of easily suppressing whitening of the cured substance of the curable composition under a hot humid condition. Examples of the (meth)acrylamide derivative include 4-(meth)acryloylmorpholine, N,N-dimethyl (meth)acrylamide, and N,N-diethyl (meth)acrylamide.

The other compound 2 may be used alone or in combination of two or more kinds thereof.

In a case where the curable composition contains the other compound 2, the content of the other compound 2 is preferably 1% to 30% by mass and more preferably 1% to 25% by mass with respect to the total mass of the curable composition. In a case where the content of the other compound 2 is greater than or equal to the above-described lower limits, the effect of adding the other compound 2 is likely to be sufficiently obtained. In a case where the content of the other compound 2 is less than or equal to the above-described upper limits, satisfactory physical properties in terms of low curing shrinkage rate are likely to be obtained.

The curable composition may be a photocurable composition or a thermosetting composition. From the viewpoint that curing can be carried out at a low temperature and the curing rate is high, a photocurable composition is preferable. In a case where the curable composition is a photocurable composition, it is preferable that the curable composition contains a photopolymerization initiator. In a case of a photocurable composition, for example, in a case of using a photocurable composition for producing a display device, the temperature is not required to be high, and thus the risk of damaging the display device due to a high temperature is low.

Examples of the photopolymerization initiator include an acetophenone-based photopolymerization initiator, a ketal-based photopolymerization initiator, a benzoin or benzoin ether-based photopolymerization initiator, a phosphine oxide-based photopolymerization initiator, a benzophenone-based photopolymerization initiator, a thioxanthone-based photopolymerization initiator, and a quinone-based photopolymerization initiator. Among these, phosphine oxide-based and thioxanthone-based photopolymerization initiators are preferable, and a phosphine oxide-based photopolymerization initiator is preferable from the viewpoint that coloration is likely to suppressed after the photopolymerization reaction. The photopolymerization initiator may be used alone or in combination of two or more kinds thereof.

The photopolymerization initiator is not particularly limited, and a commercially available product can also be used. Examples of the commercially available product include IRGACURE 819, IRGACURE TPO, IRGACURE 184, IRGACURE 2959, IRGACURE 1173, IRGACURE 127, IRGACURE 907, IRGACURE OXE01, and IRGACURE OXE02 (all manufactured by BASF SE).

In a case where the curable composition contains a photopolymerization initiator, the content of the photopolymerization initiator is preferably 0.01 to 10 parts by mass and more preferably 0.1 to 5 parts by mass with respect to 100 parts by mass of the total amount of the curable component.

Examples of the other components include a tackifier such as rosin ester, terpene phenol, or hydrogenated terpene phenol, a plasticizer such as adipic acid ester or phthalic acid ester, a polyether compound having no polymerizable unsaturated group, and a polyether polyol having an alkoxylated molecular terminal. In a case where the curable composition contains a plasticizer, the flexibility and the adhesiveness are likely to be improved. The content of these compounds is preferably 48% by mass or less and more preferably 28% by mass or less with respect to the total mass of the curable composition.

Examples of the other components include a polymerization inhibitor, a photocuring accelerator, a chain transfer agent, a light stabilizer (an ultraviolet absorber, a radical scavenger, or the like), an antioxidant, a flame retardant, an adhesiveness improver (a silane coupling agent or the like), a pigment, and a dye. Among these, it is preferable that the composition contains a polymerization inhibitor and a light stabilizer. In particular, the storage stability of the curable composition can be improved, and the molecular weight after curing is likely to be adjusted by allowing the curable composition to contain a polymerization inhibitor in an amount less than that of the polymerization initiator.

Examples of the polymerization inhibitor include a hydroquinone-based polymerization inhibitor (such as 2,5-di-tert-butylhydroquinone), a catechol-based polymerization inhibitor (such as p-tert-butylcatechol), an anthraquinone-based polymerization inhibitor, a phenothiazine-based polymerization inhibitor, and a hydroxy toluene-based polymerization inhibitor.

The ultraviolet absorber is used to prevent photodegradation of the curable composition and to improve atmospheric corrosion resistance. Examples of the ultraviolet absorber include a benzotriazole-based ultraviolet absorber, a triazine-based ultraviolet absorber, a benzophenone-based ultraviolet absorber, and a benzoate-based ultraviolet absorber. As the benzotriazole-based ultraviolet absorber, for example, those described in paragraph [0076] of PCT International Publication No. WO2014/017328 can be used.

The light stabilizer is used to prevent photodegradation of the curable composition and to improve atmospheric corrosion resistance. Examples of the light stabilizer include a hindered amine-based light stabilizer. As the hindered amine-based light stabilizer, those described in paragraph [0077] of PCT International Publication No. WO2014/017328 can be used.

The antioxidant is used to prevent oxidation of the curable composition and to improve atmospheric corrosion resistance and heat resistance. Examples of the antioxidant include a phenol-based antioxidant and a phosphorus-based antioxidant. As the phenol-based antioxidant, for example, those described in paragraph [0078] of PCT International Publication No. WO2014/017328 can be used. As the phosphorus-based antioxidant, those described in paragraph [0078] of PCT International Publication No. WO2014/017328 can be used.

In addition, a product obtained by mixing a plurality of antioxidants, light stabilizers, and the like can also be used. Examples thereof include IRGASTAB PUR68 and TINUVIN B75 (both manufactured by BASF SE).

In a case where the curable composition contains other components, the total content of the other components is preferably 100 parts by mass or less, more preferably 40 parts by mass or less, and still more preferably 35 parts by mass or less with respect to 100 parts by mass of the curable component.

The content of the chain transfer agent in the curable composition is preferably small, and is preferably 3 parts by mass or less and more preferably 2 parts by mass or less with respect to 100 parts by mass of the curable component, and it is particularly preferable that the curable composition does not contain the chain transfer agent.

Suitable examples of the applications of the curable composition containing the polyether compound containing a polymerizable unsaturated group include pressure sensitive adhesives in fields such as various building materials, packaging materials, printing materials, display materials, electrical and electronic component materials, optical component materials, and liquid crystal panels.

Examples

Hereinafter, the embodiments will be described in more detail with reference to examples, but the present invention is not limited to the following description.

[Total amount of aldehyde in AO-containing raw material]

The total content of an aldehyde with respect to the total mass of the AO-containing raw material was determined by a titration method. Specifically, the total content of the aldehyde was measured by the following operation using the following reagents.

(1) Reagent

· Sodium hydrogen sulfite
· Starch solution (5 g/L): 5 g of starch (soluble) was dissolved in about 100 mL of water, poured into 1 L of hot water while being stirred, cooled, and stored
· 0.05 mol/L (0.1 N) iodine solution
· 0.005 mol/L (0.01 N) iodine solution: solution obtained by diluting 0.05 mol/L (0.1 N) iodine solution to 10 times
· Sodium hydrogen carbonate reagent

(2) Operation

1) 150 mL of distilled water cooled in advance to 0°C to 10°C in 500 mL of an Erlenmeyer flask equipped with a stopcock was weighed in a graduated cylinder.
2) 0.05 g of sodium hydrogen sulfite reagent was weighed on a balance and added thereto.
3) 36 mL of the sample was weighed in a graduated cylinder and transferred to a flask, the flask was closed again, the mixture was mixed, and the flask was maintained at 0°C to 10°C for 15 minutes.
4) 150 mL of distilled water cooled in advance to 0°C to 10°C and weighed in a graduated cylinder and about 2 mL of a starch solution were added to the flask.
5) Titration was carried out with a 0.05 mol/L iodine solution until just before the end point, and the titration was continued with a 0.005 mol/L iodine solution until the blue color did not disappear within 1 minute.
6) 1 g of a sodium hydrogen carbonate reagent was added and mixed thereinto.
7) The titration was carried out with a 0.005 mol/L iodine solution until the light blue color did not disappear within 1 minute, and the titer was read.
8) The total content of the aldehyde was calculated by the following equation.

$$A = (V \times 0.00029)/(36 \times 0.83) \times 100$$

Here, A represents the total content (%) of the aldehyde, and V represents the titer (mL) of the 0.005 mol/L iodine solution.

[Content of acetaldehyde and AO in AO-containing raw material]

The content (ppm) of acetaldehyde and the content (% by mass) of AO with respect to the total mass of the AO-containing raw material were measured under the following conditions using a gas chromatograph (detector: hydrogen flame ionization detector (FID)).

Column: capillary, 60 m $\times$ 0.32 mm$\varphi$, DB-1301 ms, film thickness: 1.0 $\mu$m
Oven temperature: 35°C (12 min) $\rightarrow$ 10°C/min $\rightarrow$ 100°C (12 min)

INJ/DET temperature: 180/180°C
Carrier gas: He
Air flow rate: 400 mL/min
$H_2$ flow rate: 30 mL/min
Carrier flow rate (pressure): 1.3609 mL/min (24.056 psi)
Septum purge flow rate: 5 mL/min
Split ratio: 50:1
Split flow rate: 68.047 mL/min
Total flow: 74.407 mL/min
Gas saver: 20 mL/min
Injection port: back
Injection method: microsyringe, injection amount: 2 μL

[Hydroxyl value and molecular weight in terms of hydroxyl value]

The hydroxyl value (OHV) was calculated in conformity with the method B of JIS K 1557-1: 2007. The molecular weight in terms of OHV was calculated based on the expression of "56,100/hydroxyl value of polyether compound × number of hydroxyl groups of polyether compound". The number of hydroxyl groups of the polyether compound is the number of hydroxyl groups of the initiator used.

[Unsaturation degree]

The unsaturation degree (USV) of the polyether compound was measured in conformity with JIS K 1557-3: 2007.

[Silylation ratio]

The silylation ratio was measured by an internal standard method of $^1$H-NMR.

[Tensile test of cured substance of polyether compound containing reactive silicon group]

An additive of the formulation listed in Table 1 was added to 100 parts by mass of the polyether compound containing a reactive silicon group to prepare a curable composition. A mold having a thickness of 2 mm was filled with the curable composition to be measured, and the composition was aged at a temperature of 25°C and a humidity of 50% for 3 days and further aged at a temperature of 50°C and a humidity of 65% for 4 days. The obtained cured substance was punched out with a dumbbell mold to obtain a dumbbell-shaped test piece. A tensile test was performed on the dumbbell-shaped test piece at a tensile rate of 500 mm/min using a tensilon tester, and a stress (M50, $N/mm^2$), a strength ($N/mm^2$), and an elongation (%) at the time of 50% stretching were measured.

[Table 1]

|  |  | Additive (parts by mass) |
|---|---|---|
| Filler | WHITEN SB | 75.0 |
|  | White gloss CCR | 75.0 |
| Plasticizer | DINP | 40.0 |
| Thixotropy imparting agent | DISPARLON 6500 | 3.0 |
| Dewatering agent | KBM-1003 | 3.0 |
| Adhesiveness imparting agent | KBM-403 | 1.0 |
| Adhesiveness imparting agent | KBM-603 | 1.0 |
| Antioxidant | IRGANOX 1010 | 1.0 |
| Ultraviolet absorber | TINUVIN 326 | 1.0 |
| Catalyst | U860 | 1.0 |

The abbreviations in Table 1 are as follows.

WHITEN SB: heavy calcium carbonate, product (manufactured by Shiraishi Kogyo Kaisha, Ltd.)
White gloss CCR: colloidal calcium carbonate, product (manufactured by Shiraishi Kogyo Kaisha, Ltd.)
DINP: VINYCIZER 90, diisononyl phthalate, product (manufactured by Kao Corporation)
DISPARLON 6500: fatty acid amide wax, product (manufactured by Kusumoto Chemicals, Ltd.)
KBM-1003: vinyltrimethoxysilane, product (manufactured by Shin-Etsu Chemical Co., Ltd.)
KBM-403: 3-glycidyloxypropyltrimethoxysilane, product (manufactured by Shin-Etsu Chemical Co., Ltd.)
KBM-603: 3-(2-aminoethylamino)propyltrimethoxysilane, product (manufactured by Shin-Etsu Chemical Co., Ltd.)
IRGANOX 1010: hindered phenol-based antioxidant, product (manufactured by BASF SE)
TINUVIN 326: benzotriazole-based ultraviolet absorber, product (manufactured by BASF SE)
U860: dioctyltin bis(isooctyl thioglycolate), product (manufactured by Nitto Kasei Co., Ltd.)

[Mn]

The molecular weight of the polyether compound was analyzed using a GPC system (product name: HLC-8320, manufactured by Tosoh Corporation) and an RI detector.
As columns, two columns of TSK-GEL Super HZ4000 (4.6 mm $\times$ 150 mm) and two columns of Super HZ2500 (4.6 mm $\times$ 150 mm) were connected in series in this order and used. Tetrahydrofuran (THF) was used as an eluent at a flow rate of 0.35 ml/min, the column temperature was set to 40°C, and the Mn was determined by conversion according to a calibration curve created using a polystyrene standard sample (product name: Easical PS-2, manufactured by Agilent Technologies, Inc., molecular weight range: 580 to 400,000).

[Pressure sensitive adhesive force]

A base material film (a polyethylene terephthalate (PET) film having a thickness of 25 $\mu$m) was coated with the polyurethane composition using an applicator such that the thickness thereof reached 10 $\mu$m, and the composition was allowed to stand in a constant-temperature tank at 130°C, dried, and cured, thereby forming a pressure sensitive adhesive layer. The base material film on which the pressure sensitive adhesive layer was formed was cut into a width of 25 mm and a length of 150 mm to obtain an evaluation sample.
The pressure sensitive adhesive layer of the evaluation sample and a glass plate (float glass) were bonded to each other in an atmosphere of a temperature of 23°C and a humidity of 50% RH, the evaluation sample was allowed to stand on a horizontal surface with the base material film side of the evaluation sample facing upward, and a 2.0 kg roller was reciprocated once from the base material film side to pressure-bond the pressure sensitive adhesive layer and the glass plate to each other. After aging for 30 minutes in an atmosphere of a temperature of 23°C and a humidity of 50 %RH, the interface between the pressure sensitive adhesive layer of the evaluation sample and the glass plate was peeled off at a peeling angle of 180° and a peeling rate of 300 mm/min, and the pressure sensitive adhesive force of the pressure sensitive adhesive layer was measured using a universal tensile tester (product name: TENSILON RTG-1310, manufactured by A&D Company, Limited). The measured pressure sensitive adhesive force was evaluated according to the following criteria.

A ··· The pressure sensitive adhesive force was 0.10 N/25 mm or less.
B ··· The pressure sensitive adhesive force was greater than 0.10 N/25 mm.

[Coating properties]

A PET film having a thickness of 25 $\mu$m was coated with the polyurethane composition using an applicator such that the thickness thereof reached 10 $\mu$m. The presence or absence of foreign matter and cissing was confirmed by visually observing the polyurethane composition applied onto the PET film, and the evaluation was performed according to the following criteria.

A ··· The film was cleanly coated with the composition without foreign matter and cissing (smooth).
B ··· The film was not cleanly coated with the composition due to the generation of foreign matter or cissing (presence of unevenness).

[Curing properties]

A PET film having a thickness of 25 $\mu$m was coated with the polyurethane composition using an applicator such that the thickness thereof reached 10 $\mu$m, and the composition was allowed to stand in a constant-temperature tank at 130°C, dried, and cured, thereby forming a pressure sensitive adhesive layer. The presence or absence of tackiness on the surface of the pressure sensitive adhesive layer was confirmed 16 hours and 24 hours after the formation of the pressure sensitive adhesive layer, and the evaluation was performed according to the following criteria.

AA ··· Tackiness was not found 16 hours after the formation.
A ··· Tackiness was not found 24 hours after the formation.
B ··· Tackiness was found 24 hours after the formation.

[Physical properties of cured substance]

A mixed solution (curable composition) of 100 parts by mass of a polyether compound containing a polymerizable unsaturated group and 0.3 parts by mass of a photopolymerization initiator (Irgacure-819, manufactured by BASF SE) was poured into a silicone mold having a width of 5 mm, a length of 15 mm, and a thickness of 2 mm. The mixed solution was cured under conditions of a HgXe lamp, an illuminance of 100 mW/cm$^2$, and an integrated light amount of 3000 mJ/cm$^2$ in a nitrogen environment using a conveyor type UV irradiator (manufactured by ORC Manufacturing Co., Ltd.). The obtained cured substance was used as a test sample. The elongation (%), the 100% modulus (M100, MPa), and the breaking strength (MPa) of this test sample were measured under a condition of a tensile rate of 300 mm/min using a tensile tester (product name: TENSILON VTM, manufactured by Toyo Baldwin Co., Ltd.).

[AO-containing raw material]

12 kinds of POs (PO (1) to (12)) having different sources and lots were used as AO-containing raw materials. Table 2 lists the content of acetaldehyde and the total content of the aldehyde of each of PO (1) to (12). The content of PO (PO purity) of each of PO (1) to (12) was 99% or greater.

[Production Example 1: preparation of polyol P1 (initiator)]

PO (1) was polymerized with propylene glycol in the presence of a KOH catalyst, and the resultant was purified by dealkalization, thereby obtaining a polyoxypropylene diol (hereinafter, also referred to as "polyol P1"). The average number of hydroxyl groups per molecule of the polyol P1 was 2, and the molecular weight in terms of OHV was 1,000.

[Production Example 2: preparation of polyol P2 (initiator)]

PO (1) was polymerized with glycerin in the presence of a KOH catalyst, and the resultant was purified by dealkalization, thereby obtaining a polyoxypropylene triol (hereinafter, also referred to as "polyol P2"). The average number of hydroxyl groups per molecule of the polyol P2 was 3, and the molecular weight in terms of OHV was 1,000.

[Production Example 3: preparation of polyol P3 (initiator)]

PO (1) was polymerized with n-butyl alcohol in the presence of a KOH catalyst, and the resultant was purified by dealkalization, thereby obtaining a polyoxypropylene monoalcohol (hereinafter, also referred to as "polyol P3"). The average number of hydroxyl groups per molecule of the polyol P3 was 1, and the molecular weight in terms of OHV was 400.

[Production Example 4: preparation of polyol P4 (initiator)]

PO (1) was polymerized with sorbitol in the presence of a KOH catalyst, and the resultant was purified by dealkalization, thereby obtaining a polyoxypropylene polyol (hereinafter, also referred to as "polyol P4"). The average number of hydroxyl groups per molecule of the polyol P4 was 6, and the molecular weight in terms of OHV was 880.

Hereinafter, Examples 1 to 4, 9, 10, and 12 are examples, and Examples 5 to 8 and 11 are comparative examples. These are related to a polyether compound containing a hydroxyl group.

[Example 1]

The polyol P1 was used as an initiator, and PO (1) was polymerized in the presence of a zinc hexacyanocobaltate complex catalyst of tert-butyl alcohol (hereinafter, referred to as "TBA-DMC catalyst") until the molecular weight in terms of OHV reached 12,000, thereby obtaining a polyether compound 1. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound 1.

[Example 2]

The polyol P1 was used as an initiator, and PO (2) was polymerized in the presence of a TBA-DMC catalyst until the molecular weight in terms of OHV reached 18,000, thereby obtaining a polyether compound 2. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound 2.

[Example 3]

The polyol P2 was used as an initiator, and PO (3) was polymerized in the presence of a TBA-DMC catalyst until the molecular weight in terms of OHV reached 15,000, thereby obtaining a polyether compound 3. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound 3.

[Example 4]

The polyol P1 was used as an initiator, and PO (4) was polymerized in the presence of a TBA-DMC catalyst until the molecular weight in terms of OHV reached 22,000, thereby obtaining a polyether compound 4. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound 4.

[Example 5]

A polyether compound 5 was produced in the same manner as in Example 1 except that PO (5) was used instead of PO (1).

[Example 6]

A polyether compound 6 was produced in the same manner as in Example 2 except that PO (6) was used instead of PO (2).

[Example 7]

A polyether compound 7 was produced in the same manner as in Example 3 except that PO (7) was used instead of PO (3).

[Example 8]

A polyether compound 8 was produced in the same manner as in Example 4 except that PO (8) was used instead of PO (4).

[Example 9]

The polyol P3 was used as an initiator, and PO (9) was polymerized in the presence of a TBA-DMC catalyst until the molecular weight in terms of OHV reached 4,000, thereby obtaining a polyether compound 9. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound 9.

[Example 10]

The polyol P4 was used as an initiator, and PO (10) was polymerized in the presence of a TBA-DMC catalyst until the molecular weight in terms of OHV reached 42,000, thereby obtaining a polyether compound 10. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound 10.

[Example 11]

A polyether compound 11 was produced in the same manner as in Example 10 except that PO (11) was used instead of PO (10).

[Example 12]

The polyol P1 was used as an initiator, and PO (12) was polymerized in the presence of a TBA-DMC catalyst until the molecular weight in terms of OHV reached 12,000, thereby obtaining a polyether compound 12. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound 12.

Table 2 lists the number of functional groups of the initiator, the molecular weight in terms of OHV, and the USV of the polyether compound of each example.

[Table 2]

| | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| AO- containing raw material | Acetaldehyde | ppm | 5 | 4 | 4 | 4 | 10 | 8 | 18 | 20 | 4 | 5 | 28 | 0.2 |
| | Total amount of aldehyde | ppm | 6 | 5 | 4 | 13 | 16 | 20 | 30 | 30 | 3 | 4 | 29 | 0.4 |
| Polyether compound | Number of functional groups of initiator | | 2 | 2 | 3 | 2 | 2 | 2 | 3 | 2 | 1 | 6 | 6 | 2 |
| | Molecular weight in terms of OHV | | 12000 | 18000 | 15000 | 22000 | 12000 | 18000 | 15000 | 22000 | 4000 | 42000 | 42000 | 12000 |
| | USV | meq/g | 0.0006 | 0.0006 | 0.0006 | 0.0006 | 0.0009 | 0.001 | 0.0009 | 0.001 | 0.0006 | 0.0006 | 0.001 | 0.0007 |

In the comparison between Example 1 and Example 5 in which the polyether compound was produced under the same conditions except for the AO-containing raw material, the USV of Example 1 was lower than that of Example 5. Even in the comparison between Example 2 and Example 6, Example 3 and Example 7, Example 4 and Example 8, and Example 10 and Example 11, the same tendency was confirmed.

Hereinafter, Examples 1A to 4A and 9A are examples, and Examples 5A to 8A are comparative examples. These are related to a polyether compound containing a reactive silicon group.

[Example 1A]

The polyol P1 was used as an initiator, and PO (1) was polymerized in the presence of a TBA-DMC catalyst until the molecular weight in terms of OHV reached 12,000, thereby obtaining a polyether compound 1 containing a hydroxyl group. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound 1.

0.0075 g of NEOSTAN U-860 (manufactured by Nitto Kasei Co., Ltd.) and 4.97 g of 3-isocyanatopropyltriethoxysilane (content of NCO: 20.5% by mass) were added to 150 g of the polyether compound 1, and the mixture was allowed to react at 80°C for 3 hours. The ratio NCO/OH, which is the molar ratio of the amount of the isocyanate in 3-isocyanatopropyltriethoxysilane to the amount of the hydroxyl group in the polyether compound 1, was set to 0.97. The reaction was terminated after no absorption derived from NCO was confirmed by IR, thereby obtaining a polyether compound A1 containing a reactive silicon group.

[Example 2A]

The polyol P1 was used as an initiator, and PO (2) was polymerized in the presence of a TBA-DMC catalyst until the molecular weight in terms of OHV reached 18,000, thereby obtaining a polyether compound 2 containing a hydroxyl group. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound 2.

Next, a polyether compound A2 containing a reactive silicon group was obtained in the same manner as in Example 1A except that the polyether compound 2 was used instead of the polyether compound 1 and the amount of 3-isocyanatopropyltriethoxysilane added was set to 3.31 g.

[Example 3A]

The polyol P2 was used as an initiator, and PO (3) was polymerized in the presence of a TBA-DMC catalyst until the molecular weight in terms of OHV reached 15,000, thereby obtaining a polyether compound 3 containing a hydroxyl group. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound 3.

Next, a polyether compound A3 containing a reactive silicon group was obtained in the same manner as in Example 1A except that the polyether compound 3 was used instead of the polyether compound 1 and the amount of 3-isocyanatopropyltriethoxysilane added was set to 5.96 g.

[Example 4A]

The polyol P1 was used as an initiator, and PO (4) was polymerized in the presence of a TBA-DMC catalyst until the molecular weight in terms of OHV reached 22,000, thereby obtaining a polyether compound 4 containing a hydroxyl group. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound 4.

Next, a polyether compound A4 containing a reactive silicon group was obtained in the same manner as in Example 1A except that the polyether compound 4 was used instead of the polyether compound 1 and the amount of 3-isocyanatopropyltriethoxysilane added was set to 2.71 g.

[Example 5A]

A polyether compound 5 containing a hydroxyl group and a polyether compound A5 containing a reactive silicon group were produced in the same manner as in Example 1A except that PO (5) was used instead of PO (1).

[Example 6A]

A polyether compound 6 containing a hydroxyl group and a polyether compound A6 containing a reactive silicon group were produced in the same manner as in Example 2A except that PO (6) was used instead of PO (2).

[Example 7A]

A polyether compound 7 containing a hydroxyl group and a polyether compound A7 containing a reactive silicon group were produced in the same manner as in Example 3A except that PO (7) was used instead of PO (3).

[Example 8A]

A polyether compound 8 containing a hydroxyl group and a polyether compound A8 containing a reactive silicon group were produced in the same manner as in Example 4A except that PO (8) was used instead of PO (4).

[Example 9A]

The polyol P1 was used as an initiator, and PO (12) was polymerized in the presence of a TBA-DMC catalyst until the molecular weight in terms of OHV reached 12,000, thereby obtaining a polyether compound 9. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound 9.

Next, a polyether compound A9 containing a reactive silicon group was obtained in the same manner as in Example 1A except that the polyether compound 9 was used instead of the polyether compound 1.

Table 3 lists the number of functional groups of the initiator, the molecular weight in terms of OHV, and the USV of the polyether compound of each example, and the silylation ratio of the polyether compound A and the results of the tensile test of the cured substance of each example.

[Table 3]

| | | | Example 1A | Example 2A | Example 3A | Example 4A | Example 5A | Example 6A | Example 7A | Example 8A | Example 9A |
|---|---|---|---|---|---|---|---|---|---|---|---|
| AO-containing raw material | Acetaldehyde | ppm | 5 | 4 | 4 | 4 | 10 | 8 | 18 | 20 | 0.2 |
| AO-containing raw material | Total amount of aldehyde | ppm | 6 | 5 | 4 | 13 | 16 | 20 | 30 | 30 | 0.4 |
| Polyether compound | Number of functional groups of initiator | | 2 | 2 | 3 | 2 | 2 | 2 | 3 | 2 | 2 |
| Polyether compound | Molecular weight in terms of OHV | | 12000 | 18000 | 15000 | 22000 | 12000 | 18000 | 15000 | 22000 | 12000 |
| Polyether compound | USV | meq/g | 0.0006 | 0.0006 | 0.0006 | 0.0006 | 0.0009 | 0.001 | 0.0009 | 0.001 | 0.0007 |
| Polyether compound A | Silylation ratio | % | 97 | 97 | 97 | 97 | 97 | 97 | 97 | 97 | 97 |
| Tensile test | M50 | N/mm$^2$ | 0.71 | 0.60 | 1.10 | 0.50 | 0.71 | 0.61 | 1.10 | 0.51 | 0.71 |
| Tensile test | Strength | N/mm$^2$ | 1.61 | 1.65 | 2.05 | 1.75 | 1.50 | 1.55 | 1.99 | 1.43 | 1.55 |
| Tensile test | Elongation | % | 193 | 263 | 115 | 370 | 170 | 232 | 114 | 320 | 180 |

In the comparison between Example 1A and Example 5A in which the polyether compound A was produced under the same conditions except for the AO-containing raw material, the strength and the elongation of the cured substance of Example 1A were more excellent than those of Example 5A. Even in the comparison between Example 2A and Example 6A, Example 3A and Example 7A, Example 4A and Example 8A, and Example 9A and Example 5A, the same tendency was confirmed.

Hereinafter, Examples 1B to 3B are examples, and Examples 4B to 6B are comparative examples. These are related to a polyether compound having a urethane bond.

[Production Example (a-1)]

The polyol P4 was used as an initiator, and PO (1) was polymerized in the presence of a TBA-DMC catalyst until the molecular weight in terms of OHV reached 42,000, thereby obtaining a polyether compound (a-1) containing a hydroxyl group. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound (a-1).

[Production Example (a-2)]

The polyol P1 was used as an initiator, and PO (2) was polymerized in the presence of a TBA-DMC catalyst until the molecular weight in terms of OHV reached 10,000, thereby obtaining a polyether compound (a-2) containing a hydroxyl group. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound (a-2).

[Production Example (a-3)]

The polyol P2 was used as an initiator, and PO (3) was polymerized in the presence of a TBA-DMC catalyst until the molecular weight in terms of OHV reached 10,000, thereby obtaining a polyether compound (a-3). The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound (a-3).

[Production Example (b-1)]

A polyether compound (b-1) containing a hydroxyl group was produced in the same manner as in Production Example (a-1) except that PO (5) was used instead of PO (1).

[Production Example (b-2)]

A polyether compound (b-2) containing a hydroxyl group was produced in the same manner as in Production Example (a-2) except that PO (6) was used instead of PO (2).

[Production Example (b-3)]

A polyether compound (b-3) containing a hydroxyl group was produced in the same manner as in Production Example (a-3) except that PO (7) was used instead of PO (3).

Table 4 lists the number of functional groups of the initiator, the molecular weight in terms of OHV, the Mn, and the USV of each polyether compound.

[Table 4]

| Polyether compound | | | (a-1) | (a-2) | (a-3) | (b-1) | (b-2) | (b-3) |
|---|---|---|---|---|---|---|---|---|
| AO-containing raw material | Acetaldehyde | ppm | 5 | 4 | 4 | 10 | 8 | 18 |
| | Total amount of aldehyde | ppm | 6 | 5 | 4 | 16 | 20 | 30 |
| Number of functional groups of initiator | | | 6 | 2 | 3 | 6 | 2 | 3 |

(continued)

| Polyether compound | | (a-1) | (a-2) | (a-3) | (b-1) | (b-2) | (b-3) |
|---|---|---|---|---|---|---|---|
| Properties | Molecular weight in terms of OHV | 42000 | 10000 | 10000 | 42000 | 10000 | 10000 |
| | Mn | 49000 | 15000 | 15000 | 49000 | 15000 | 15000 |
| | USV    meq/g | 0.0006 | 0.0006 | 0.0006 | 0.0009 | 0.001 | 0.0009 |

[Example 1B]

100 parts by mass of the polyether compound (a-1), 7.0 parts by mass of a polyisocyanate compound (CORONATE HX, manufactured by Tosoh Corporation, content of isocyanate group: 21.3% by mass), 0.04 parts by mass of NACEM Iron (III) (manufactured by Nihon Kagaku Sangyo Co., Ltd.) as a catalyst, and ethyl acetate in the amount set such that the concentration of the solid content of the entire solvent was 50% by mass were uniformly mixed for a urethanization reaction, thereby obtain a polyurethane composition containing a polyether compound having a urethane bond.

[Examples 2B to 6B]

A polyurethane composition containing a polyether compound B having a urethane bond was obtained in the same manner as in Example 1B except that the polyether compound listed in Table 5 was used instead of 100 parts by mass of the polyether compound (a-1) and the amount of the polyisocyanate compound blended was set to the value listed in Table 5.

Table 5 lists the average number of functional groups, the Mn, and the Mn per average number of functional groups of the polyether compound used in each example, and the evaluation results of the pressure sensitive adhesive force, the coating properties, and the curing properties of the polyurethane composition of each example. In Table 5, each value of "properties of polyether compound" of Example 2B and Example 5B is the average value in a mixture of two kinds of polyether compounds.

[Table 5]

| | | Example 1B | Example 2B | Example 3B | Example 4B | Example 5B | Example 6B |
|---|---|---|---|---|---|---|---|
| Polyether compound (parts by mass) | (a-1) | 100 | 80 | - | - | - | - |
| | (a-2) | - | - | 100 | - | - | - |
| | (a-3) | - | 20 | - | - | - | - |
| | (b-1) | - | - | - | 100 | 80 | - |
| | (b-2) | - | - | - | - | - | 100 |
| | (b-3) | - | - | - | - | 20 | - |
| Properties of polyether compound | Average number of functional groups | 6.0 | 4.2 | 3.0 | 6.0 | 4.2 | 3.0 |
| | Mn | 49000 | 34000 | 15000 | 49000 | 34000 | 15000 |
| | Mn per average number of functional groups | 8200 | 8000 | 5000 | 8200 | 8000 | 5000 |
| Polyisocyanate compound (parts by mass) | CORONATE HX (NCO = 21.3% by mass) | 7.0 | 7.6 | 14.8 | 7.0 | 7.6 | 14.8 |

(continued)

|  |  | Example 1B | Example 2B | Example 3B | Example 4B | Example 5B | Example 6B |
|---|---|---|---|---|---|---|---|
| Evaluation | Pressure sensitive adhesive force | A | A | A | A | A | A |
|  | Coating properties | A | A | B | A | A | B |
|  | Curing properties | A | AA | A | B | B | B |

In a comparison between Example 1B and Example 4B in which the polyurethane composition was produced under the same conditions except for the AO-containing raw material, Example 1B showed more excellent curing properties. Even in the comparison between Example 2B and Example 5B, and Example 3B and Example 6B, the same tendency was confirmed.

Hereinafter, Examples 1C to 4C and 9C are examples, and Examples 5C to 8C are comparative examples. These are related to a polyether compound containing a polymerizable unsaturated group.

[Example 1C]

The polyol P1 was used as an initiator, and PO (1) was polymerized in the presence of a TBA-DMC catalyst until the molecular weight in terms of OHV reached 12,000, thereby obtaining a polyether compound 1 containing a hydroxyl group. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound A.

0.015 g of dibutyltin dilaurate and 3.42 g of 2-isocyanatoethyl acrylate (content of NCO: 29.8% by mass) were added to 150 g of the polyether compound 1, and the mixture was allowed to react at 80°C for 2 hours. The ratio NCO/OH, which is the molar ratio of the amount of the isocyanate in 2-isocyanatoethyl acrylate to the amount of the hydroxyl group in the polyether compound 1, was set to 0.97. The reaction was terminated after no absorption derived from NCO was confirmed by IR, thereby obtaining a polyether compound C1 containing a polymerizable unsaturated group.

[Example 2C]

The polyol P1 was used as an initiator, and PO (2) was polymerized in the presence of a TBA-DMC catalyst until the molecular weight in terms of OHV reached 18,000, thereby obtaining a polyether compound 2 containing a hydroxyl group. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound 2.

Next, a polyether compound C2 containing a polymerizable unsaturated group was obtained in the same manner as in Example 1C except that the polyether compound 2 was used instead of the polyether compound 1 and the amount of 2-isocyanatoethyl acrylate added was set to 2.28 g.

[Example 3C]

The polyol P2 was used as an initiator, and PO (3) was polymerized in the presence of a TBA-DMC catalyst until the molecular weight in terms of OHV reached 15,000, thereby obtaining a polyether compound 3 containing a hydroxyl group. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound 3.

Next, a polyether compound C3 containing a polymerizable unsaturated group was obtained in the same manner as in Example 1C except that the polyether compound 3 was used instead of the polyether compound 1 and the amount of 2-isocyanatoethyl acrylate added was set to 4.10 g.

[Example 4C]

The polyol P1 was used as an initiator, and PO (4) was polymerized in the presence of a TBA-DMC catalyst until the molecular weight in terms of OHV reached 22,000, thereby obtaining a polyether compound 4 containing a hydroxyl group. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound 4.

Next, a polyether compound C3 containing a polymerizable unsaturated group was obtained in the same manner as in Example 1C except that the polyether compound 4 was used instead of the polyether compound 1 and the amount of 2-isocyanatoethyl acrylate added was set to 1.86 g.

[Example 5C]

A polyether compound 5 containing a hydroxyl group and a polyether compound C5 containing a polymerizable unsaturated group were produced in the same manner as in Example 1C except that PO (5) was used instead of PO (1).

[Example 6C]

A polyether compound 6 containing a hydroxyl group and a polyether compound C6 containing a polymerizable unsaturated group were produced in the same manner as in Example 2C except that PO (6) was used instead of PO (2).

[Example 7C]

A polyether compound 7 containing a hydroxyl group and a polyether compound C7 containing a polymerizable unsaturated group were produced in the same manner as in Example 3C except that PO (7) was used instead of PO (3).

[Example 8C]

A polyether compound 8 containing a hydroxyl group and a polyether compound C8 containing a polymerizable unsaturated group were produced in the same manner as in Example 4C except that PO (8) was used instead of PO (4).

[Example 9C]

The polyol P1 was used as an initiator, and PO (12) was polymerized in the presence of a TBA-DMC catalyst until the molecular weight in terms of OHV reached 12,000, thereby obtaining a polyether compound 9. The polymerization was carried out by adding 0.1% by mass of Irganox 1010 (manufactured by BASF SE) as a stabilizer. The amount of the TBA-DMC catalyst used was set to the amount at which the concentration of the TBA-DMC catalyst was 50 ppm with respect to the total mass of the polyether compound 9.

Next, a polyether compound C9 containing a polymerizable unsaturated group was obtained in the same manner as in Example 1C except that the polyether compound 9 was used instead of the polyether compound 1.

Table 6 lists the number of functional groups of the initiator, the molecular weight in terms of OHV, and the USV of the polyether compound of each example, and the physical properties of the cured substance of the polyether compound C of each example.

[Table 6]

| | | | Example 1C | Example 2C | Example 3C | Example 4C | Example 5C | Example 6C | Example 7C | Example 8C | Example 9C |
|---|---|---|---|---|---|---|---|---|---|---|---|
| AO-containing raw material | Acetaldehyde | ppm | 5 | 4 | 4 | 4 | 10 | 8 | 18 | 20 | 0.2 |
| | Total amount of aldehyde | ppm | 6 | 5 | 4 | 13 | 16 | 20 | 30 | 30 | 0.4 |
| Polyether compound | Number of functional groups of initiator | | 2 | 2 | 3 | 2 | 2 | 2 | 3 | 2 | 2 |
| | Molecular weight in terms of OHV | | 12000 | 18000 | 15000 | 22000 | 12000 | 18000 | 15000 | 22000 | 12000 |
| | USV | meq/g | 0.0006 | 0.0006 | 0.0006 | 0.0006 | 0.0009 | 0.001 | 0.0009 | 0.001 | 0.0007 |
| Curable composition | Polyether compound C | parts | 100 | 100 | 100 | 100 | 100 | 100 | 100 | 100 | 100 |
| | Photocuring agent | parts | 0.3 | 0.3 | 0.3 | 0.3 | 0.3 | 0.3 | 0.3 | 0.3 | 0.3 |
| Physical properties of cured substance | Elongation | % | 80 | 100 | 50 | 160 | 75 | 105 | 48 | 162 | 78 |
| | M100 | MPa | 0.50 | 0.61 | 0.40 | 0.85 | 0.52 | 0.60 | 0.40 | 0.86 | 0.51 |
| | Breaking strength | MPa | 0.55 | 0.64 | 0.45 | 1.15 | 0.51 | 0.60 | 0.40 | 1.08 | 0.53 |

In the comparison between Example 1C and Example 5C in which the polyether compound C was produced under the same conditions except for the AO-containing raw material, Example 1C showed more excellent breaking strength of the cured substance. Even in the comparison between Example 2C and Example 6C, Example 3C and Example 7C, Example 4C and Example 8C, and Example 9C and Example 5C, the same tendency was confirmed.

INDUSTRIAL APPLICABILITY

According to the present invention, it is possible to provide a production method of obtaining a polyether compound having a low unsaturation degree.

According to the present invention, it is also possible to provide a production method of obtaining a polyether compound containing a reactive silicon group, in which a cured substance has excellent strength.

According to the present invention, it is also possible to provide a production method of obtaining a polyether compound having a urethane bond, which has excellent curing properties.

According to the present invention, it is also possible to provide a production method of obtaining a polyether compound containing a polymerizable unsaturated group, in which a cured substance has excellent strength.

The present application claims priority based on Japanese Patent Application No. 2024-112667 filed on July 12, 2024, Japanese Patent Application No. 2024-112619 filed on July 12, 2024, Japanese Patent Application No. 2024-112611 filed on July 12, 2024, and Japanese Patent Application No. 2024-112644 filed on July 12, 2024, the entire contents of which are incorporated herein by reference.

**Claims**

1. A method of producing a polyether compound containing a hydroxyl group, the method comprising:

   bringing an initiator containing a hydroxyl group into contact with an alkylene oxide-containing raw material in a presence of a composite metal cyanide complex catalyst and polymerizing an alkylene oxide in the alkylene oxide-containing raw material with the initiator,
   wherein a total content of an aldehyde which is measured by a titration method for the alkylene oxide-containing raw material is less than 15 ppm with respect to a total mass of the alkylene oxide-containing raw material.

2. The production method according to Claim 1,
   wherein a content of acetaldehyde in the alkylene oxide-containing raw material is less than 10 ppm with respect to the total mass of the alkylene oxide-containing raw material.

3. The production method according to Claim 1 or 2,
   wherein the alkylene oxide-containing raw material contains an alkylene oxide having 3 or more carbon atoms.

4. The production method according to any one of Claims 1 to 3,
   wherein the number of hydroxyl groups in the initiator is 1 to 10.

5. The production method according to any one of Claims 1 to 4,
   wherein a molecular weight of the polyether compound containing the hydroxyl group in terms of hydroxyl value is 1,000 to 100,000.

6. The production method according to any one of Claims 1 to 5,
   wherein a slurry catalyst in which particles of the composite metal cyanide complex catalyst are dispersed in a dispersion medium is used.

7. A method of producing a polyether compound containing a reactive silicon group, the method comprising:

   converting a hydroxyl group of a polyether compound containing the hydroxyl group, which is obtained by the production method according to any one of Claims 1 to 6, into a group containing a reactive silicon group represented by Formula **1,**

   $-SiR_aX_{3-a}$          Formula 1

   in Formula **1,** R represents a monovalent organic group having 1 to 20 carbon atoms, which is an organic group other than a hydrolyzable group, X represents a hydroxyl group, a halogen atom, or a hydrolyzable group, a represents an integer of 0 to 2, and R's are the same as or different from each other in a case where a represents 2, and X's are the same as or different from each other in a case where a represents 0 or 1.

8. A method of producing a polyether compound having a urethane bond, the method comprising:
reacting a polyether compound containing a hydroxyl group, which is obtained by the production method according to any one of Claims 1 to 6, with a polyisocyanate.

9. A method of producing a polyether compound containing a polymerizable unsaturated group, the method comprising:
converting a hydroxyl group of a polyether compound containing the hydroxyl group, which is obtained by the production method according to any one of Claims 1 to 6, into a group containing a polymerizable unsaturated group.

## INTERNATIONAL SEARCH REPORT

| International application No. |
| --- |
| **PCT/JP2025/024634** |

**A. CLASSIFICATION OF SUBJECT MATTER**

*C08G 65/12*(2006.01)i; *C08G 65/336*(2006.01)i; *C08G 18/48*(2006.01)n; *C08G 65/32*(2006.01)n
FI:   C08G65/12; C08G65/336; C08G65/32; C08G18/48

According to International Patent Classification (IPC) or to both national classification and IPC

**B. FIELDS SEARCHED**

Minimum documentation searched (classification system followed by classification symbols)

C08G65/00-67/04; C08G18/00-18/87; C08G71/00-71/04

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2005-501942 A (BASF AKTIENGESELLSCHAFT) 20 January 2005 (2005-01-20) | 1-6, 8 |
|  | claims 1-10, paragraphs [0004], [0014], [0019]-[0023], [0035], [0056]-[0057] | |
| Y | | 7,9 |
| X | WO 2011/085772 A1 (BASF SE) 21 July 2011 (2011-07-21) | 1-6, 8 |
|  | claims 1-15, p. 3, lines 13-33, p. 5, lines 1-18, p. 11, lines 25-30, examples | |
| Y | | 7,9 |
| Y | JP 2015-214605 A (ASAHI GLASS COMPANY, LIMITED) 03 December 2015 (2015-12-03) | 7 |
|  | claims 1-16 | |
| A | | 1-6, 8-9 |
| Y | WO 2014/073580 A1 (ASAHI GLASS COMPANY, LIMITED) 15 May 2014 (2014-05-15) | 7 |
|  | claims 1-15 | |
| A | | 1-6, 8-9 |

✓ Further documents are listed in the continuation of Box C.    ✓ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 September 2025** | **30 September 2025** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2025/024634** |

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2000-351827 A (ASAHI GLASS COMPANY, LIMITED) 19 December 2000 (2000-12-19)<br>claims 1-4 | 9 |
| A | | 1-8 |
| Y | JP 2001-226150 A (DAINIPPON INK & CHEMICALS INC.) 21 August 2001 (2001-08-21)<br>claims 1-8 | 9 |
| A | | 1-8 |
| Y | WO 2020/071328 A1 (AGC INC.) 09 April 2020 (2020-04-09)<br>claims 1-16 | 9 |
| A | | 1-8 |

Form PCT/ISA/210 (second sheet) (July 2022)

**INTERNATIONAL SEARCH REPORT**
Information on patent family members

International application No.

**PCT/JP2025/024634**

| Patent document cited in search report | | | Publication date (day/month/year) | Patent family member(s) | | | Publication date (day/month/year) |
|---|---|---|---|---|---|---|---|
| JP | 2005-501942 | A | 20 January 2005 | US 2004/0249107 A1 claims 1-19, paragraphs [0004], [0012], [0020]-[0024], [0037], [0067]-[0068] WO 2003/020787 A1 EP 1440102 A1 CN 1564836 A KR 10-2004-0029144 A | | | |
| WO | 2011/085772 | A1 | 21 July 2011 | SG 181448 A1 | | | |
| JP | 2015-214605 | A | 03 December 2015 | (Family: none) | | | |
| WO | 2014/073580 | A1 | 15 May 2014 | (Family: none) | | | |
| JP | 2000-351827 | A | 19 December 2000 | US 2002/0068770 A1 claims 1-5 WO 00/077065 A1 EP 1191047 A1 TW 257932 B KR 2002-0010695 A | | | |
| JP | 2001-226150 | A | 21 August 2001 | (Family: none) | | | |
| WO | 2020/071328 | A1 | 09 April 2020 | CN 112789340 A claims 1-16 TW 202028404 A | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023095636 A
- JP 2023155601 A
- JP 2012126839 A
- JP 3194255 B
- WO 2013180203 A
- WO 2014192842 A
- WO 2016002907 A
- JP 2014 A
- JP 88481 A

- JP 2015010162 A
- JP 2015105293 A
- JP 2017039728 A
- JP 2017214541 A
- WO 2014017328 A
- JP 2024112667 A
- JP 2024112619 A
- JP 2024112611 A
- JP 2024112644 A